# EUROPEAN PATENT APPLICATION

(11) **EP 1 693 403 A1**
(43) Date of publication of application: **23.08.2006**
(21) Application number: 04820219.6
(22) Date of filing: 08.12.2004
(51) Int. Cl.: C08J 3/22, C08G 63/692, C08K 5/5313, C08L 67/00, C08L 101/00

(54) **THERMOPLASTIC RESIN COMPOSITION FOR MASTERBATCH, PROCESS FOR PRODUCING MOLDING MATERIAL COMPRISING THE SAME, THERMOPLASTIC RESIN COMPOSITION OBTAINED WITH THE SAME, AND PROCESS FOR PRODUCING THE COMPOSITION**

(30) Priority: 09.12.2003 JP 2003410547; 04.10.2004 JP 2004291503; 04.10.2004 JP 2004291506
(71) Applicant: Toyo Boseki Kabushiki Kaisha, Osaka-shi, Osaka 530-8230 (JP); Nagase ChemteX Corporation, Osaka-shi, Osaka 550-8668 (JP)
(72) Inventor: SATO, Maki, /o Toyo Boseki Kabushiki Kaisha, Ohtsu-shi, Shiga 520-0292 (JP); TAKEUCHI, Hideo, c/o Toyo Boseki Kabushiki Kaisha, Osaka-shi, Osaka 530-8230 (JP); TANAKA, Machiko, c/o Toyo Boseki Kabushiki Kaisha, Osaka-shi, Osaka 530-8230 (JP); KUBOTA, Fuyuhiko, Toyo Boseki Kabushiki Kaisha, Ohtsu-shi, Shiga 520-0292 (JP); GYOBU, Shoichi, c/o Toyo Boseki Kabushiki Kaisha, Tsuruga-shi, Fukui 914-0047 (JP); YASUDA, Shigeru, c/o Toyo Boseki Kabushiki Kaisha, Osaka-shi, Osaka 530-8230 (JP); NISHIO, Kenichi, c/o Nagase Chemtex Corporation, Tatsuno-shi, Hyogo 679-4124 (JP); OHNISHI, Toshimasa, c/o Nagase Chemtex Corp., Tatsuno-shi, Hyogo 679-4124 (JP)
(74) Representative: Müller-Boré & Partner Patentanwälte
(86) International application number: PCT/JP2004/018266
(87) International publication number: WO 2005/056646

(57) **Abstract**

The present invention related to a thermoplastic resin composition for masterbatches, comprising an organophosphorus compound represented by General Formula (1): 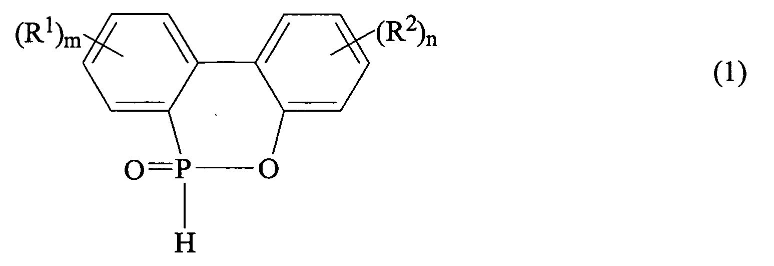 wherein R¹ and R² each represent an organic group or a halogen atom, and m and n each represent an integer of 0 to 4, and when m or n is an integer of 2 to 4, R¹ and R² may be the same or different, and a thermoplastic resin, wherein the thermoplastic resin composition for masterbatches contains a phosphorus content of 5000 ppm or more. The thermoplastic resin composition for masterbatches can easily be molded even when it has high phosphorus content and thus flame retardancy.

## Description

### Technical Field

The invention relates to a thermoplastic resin composition for masterbatches having a phosphorus content of 5000 ppm or more. The invention also relates to a method of producing a molding material in the form of chips from the thermoplastic resin composition for masterbatches. The thermoplastic resin composition for masterbatches of the invention can easily be mixed as a masterbatch with the same type or different types of thermoplastic resin (base resins) and form various types of thermoplastic resin compositions with flame retardancy. The resulting thermoplastic resin compositions can be subjected to extrusion molding, injection molding, or the like to form clothing fibers, industrial material fibers, films, engineering plastics, adhesives, or the like.

### Background Art

In general, methods for imparting flame retardancy to thermoplastic resins typically include adding flame retardants (chemical compounds, monomers, or the like) to general thermoplastic resins. However, there is a problem in which the chemical structures or high contents of some flame retardants can cause bleeding out of the flame retardants or darkening of thermoplastic resin composition products. Some flame retardants of phosphorus-containing compounds are known to cause little bleeding out (see Patent Literature 1 listed below). However, the addition of high concentrations of the phosphorus compounds for imparting flame retardancy to thermoplastic resins tends to reduce the processibility or workability, and thus high-phosphorus-content thermoplastic resin compositions have not been obtained.

Examples of known phosphorus compounds include organophosphorus compounds such as 6-oxo-(6H)-dibenzo-(c,e)(1,2)-oxaphosphorine (hereinafter such a compound is also referred to as DOP). DOP can be derivatized into compounds with a certain functional group such as a carboxyl group (see Patent Literature 2 listed below). A variety of methods for producing DOP are known (see Patent Literature 3 listed below). DOP or DOP derivatives have good resistance to discoloration and can produce thermoplastic resin compositions with good color tones.

The DOP derivative with the functional group can be incorporated as a copolymer component into thermoplastic resins such as polyesters. In the copolymerization process, the content of the DOP derivative can be adjusted so as to provide a specific content of phosphorus in the thermoplastic resin so that the resulting thermoplastic resin composition can have flame retardancy. While copolymerization is possible, however, an increase in the content of the DOP derivative incorporated in the thermoplastic resin leads to an increase in fluctuation of the melt viscosity of the resulting thermoplastic resin, and the difficulty in adjusting the melt viscosity leads to difficulty in adjusting the shape of chips (see Patent Literatures 4, 5 and 6 listed below).

Known phosphorus compounds other than the above include such an organophosphorus compound as (2-carboxyethyl)phenylphosphinic acid (hereinafter such a compound is also referred to as CPPA) (see Patent Literature 7 listed below). The CPPA can also be incorporated as a copolymer component into thermoplastic resins such as polyesters (see Patent Literatures 8 and 9 listed below). In the copolymerization process, the content of the CPPA can be adjusted so as to provide a specific content of phosphorus in the thermoplastic resin so that the resulting thermoplastic resin composition can have flame retardancy. While copolymerization is possible, however, an increase in the content of the CPPA incorporated in the thermoplastic resin leads to an increase in fluctuation of the melt viscosity of the resulting thermoplastic resin, and the difficulty in adjusting the melt viscosity also leads to difficulty in adjusting the shape of chips.
Patent Literature 1: Japanese Patent Application Laid-Open (JP-A) No. 09-296120
Patent Literature 2: JP-A No. 2003-40897
Patent Literature 3: Japanese Patent Publication No. 55-41610
Patent Literature 4: JP-A No. 2000-319368
Patent Literature 5: JP-A No. 2001-226820
Patent Literature 6: JP-A No. 2002-129430
Patent Literature 7: Japanese Patent Publication No. 60-21600
Patent Literature 8: JP-A No. 07-102418
Patent Literature 9: JP-A No. 07-41649

### Disclosure of Invention

It is an object of the invention to provide a thermoplastic resin composition that contains an organophosphorus compound such as DOP, a derivative of DOP, and CPPA and can easily be molded even when it has a high phosphorus content and thus flame retardancy and to provide a method of producing such a composition.

The inventors have made active investigations to solve the above problems and finally have found that the above object can be achieved by the means as described below to complete the invention. Thus, the invention is directed to the following:
1. A thermoplastic resin composition for masterbatches, comprising:
   an organophosphorus compound represented by General Formula (1): 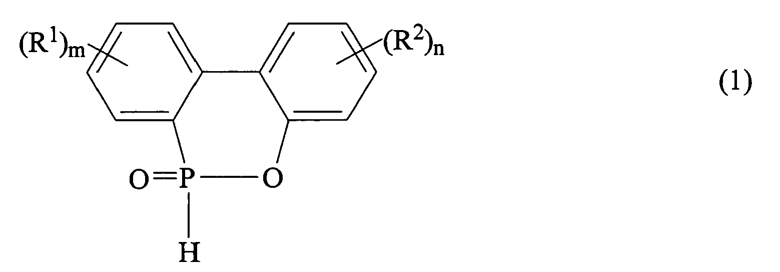 wherein R¹ and R² each represent an organic group or a halogen atom, and m and n each represent an integer of 0 to 4, and when m or n is an integer of 2 to 4, R¹ and R² may be the same or different, and/or an organophosphorus compound represented by General Formula (2): 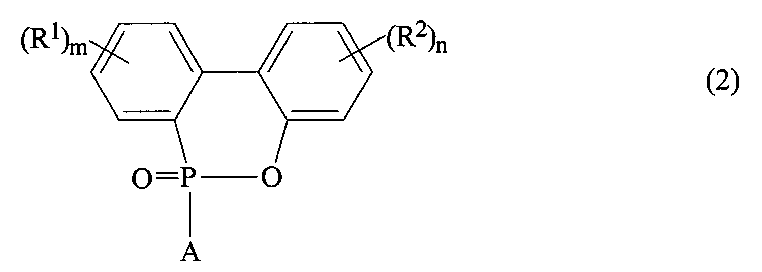 wherein R¹ and R² each represent an organic group or a halogen atom, and m and n each represent an integer of 0 to 4, and when m or n is an integer of 2 to 4, R¹ and R² may be the same or different, and A represents an organic group that is the same as or different **from R**^{**1**} **and R**^{**2**}**; and**
   a thermoplastic resin, wherein
   the thermoplastic resin composition for masterbatches contains a phosphorus content of 5000 ppm or more.
2. The thermoplastic resin composition for masterbatches according to the above described 1, wherein the thermoplastic resin composition for masterbatches contains a bivalent metal compound such that the content of the bivalent metal is from 1 ppm to 250 ppm based on the amount of the organophosphorus compound represented by General Formula (1) and/or the organophosphorus compound represented by General Formula (2).
3. A thermoplastic resin composition for masterbatches, comprising:
   a thermoplastic resin in which an organophosphorus compound represented by General Formula (3): 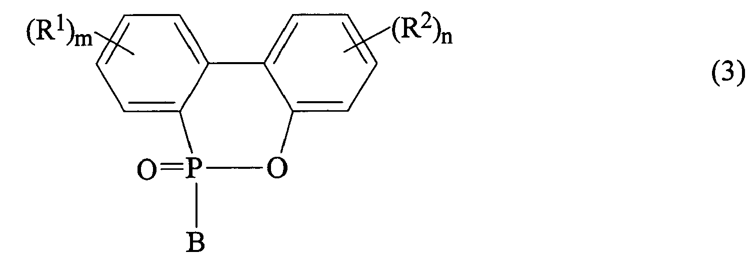 wherein R¹ and R² each represent an organic group or a halogen atom, and m and n each represent an integer of 0 to 4, and when m or n is an integer of 2 to 4, R¹ and R² may be the same or different, and B represents an organic group having a functional group, is incorporated as a constituent, wherein
   the thermoplastic resin composition for masterbatches contains a phosphorus content of 5000 ppm or more.
4. The thermoplastic resin composition for masterbatches according to the above described 3, wherein the thermoplastic resin composition for masterbatches contains a bivalent metal compound such that the content of the bivalent metal is from 1 ppm to 250 ppm based on the amount of the organophosphorus compound represented by General Formula (3).
5. The thermoplastic resin composition for masterbatches according to the above described 2 or 4, wherein the bivalent metal is zinc.
6. The thermoplastic resin composition for masterbatches according to any one of the above described 1 to 5, wherein the organophosphorus compound forms a fine powder with a bulk density of 2 cm³/g or less.
7. The thermoplastic resin composition for masterbatches according to any one of the above described 1 to 6, wherein the thermoplastic resin is a polyester resin.
8. The thermoplastic resin composition for masterbatches according to the above described 7, wherein the polyester resin is at least one selected from polyethylene terephthalate, polybutylene terephthalate, polytrimethylene terephthalate, and polylactic acid.
9. The thermoplastic resin composition for masterbatches according to the above described 7 or 8, wherein a germanium compound is used as a polymerization catalyst in production of the polyester resin.
10. The thermoplastic resin composition for masterbatches according to any one of the above described 1 to 9, further comprising a weather-resistance-imparting agent.
11. The thermoplastic resin composition for masterbatches according to any one of the above described 1 to 10, wherein the weather-resistance-imparting agent is at least one compound selected from hindered amine compounds, nitrogen-containing hindered phenolic compounds, metal salt hindered phenolic compounds, phenolic compounds, hindered phenolic compounds, and sulfur compounds.
12. The thermoplastic resin composition for masterbatches according to any one of the above described 1 to 11, wherein the thermoplastic resin composition for masterbatches has an L value (whiteness) of 25 or more, where the L value is measured with a Hunter color-difference meter.
13. A thermoplastic resin composition for masterbatches, comprising:
   an organophosphorus compound represented by General Formula (4): 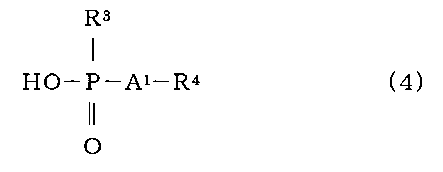 wherein R³ represents a monovalent organic group of 1 to 18 carbon atoms, R⁴ represents a monovalent functional group, and A¹ represents a bivalent organic group of 1 to 18 carbon atoms; and
   a thermoplastic resin, wherein
   the thermoplastic resin composition for masterbatches contains a phosphorus content of 5000 ppm or more.
14. A thermoplastic resin composition for masterbatches, comprising:
   a thermoplastic resin in which an organophosphorus compound represented by General Formula (4): 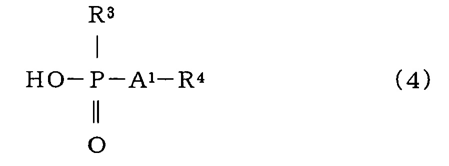 wherein R³ represents a monovalent organic group of 1 to 18 carbon atoms, R⁴ represents a monovalent functional group, and A¹ represents a bivalent organic group of 1 to 18 carbon atoms, is incorporated as a constituent, wherein
   the thermoplastic resin composition for masterbatches contains a phosphorus content of 5000 ppm or more.
15. The thermoplastic resin composition for masterbatches according to the above described 13 or 14, wherein the organophosphorus compound forms a fine powder with a bulk density of at most 2 cm³/g.
16. The thermoplastic resin composition for masterbatches according to any one of the above described 13 to 15, wherein the thermoplastic resin is a polyester resin.
17. The thermoplastic resin composition for masterbatches according to the above described 16, wherein the polyester resin is at least one selected from polyethylene terephthalate, polybutylene terephthalate, polytrimethylene terephthalate, and polylactic acid.
18. The thermoplastic resin composition for masterbatches according to the above described 16 or 17, wherein a germanium compound is used as a polymerization catalyst in production of the polyester resin.
19. The thermoplastic resin composition for masterbatches according to any one of the above described 13 to 18, further comprising a weather-resistance-imparting agent.
20. The thermoplastic resin composition for masterbatches according to any one of the above described 13 to 19, wherein the weather-resistance-imparting agent is at least one compound selected from hindered amine compounds, nitrogen-containing hindered phenolic compounds, metal salt hindered phenolic compounds, phenolic compounds, hindered phenolic compounds, and sulfur compounds.
21. The thermoplastic resin composition for masterbatches according to any one of the above described 13 to 20, wherein the thermoplastic resin composition for masterbatches has an L value (whiteness) of 40 or more, where the L value is measured with a Hunter color-difference meter.
22. The thermoplastic resin composition for masterbatches according to any one of the above described 1 to 21, wherein the thermoplastic resin composition for masterbatches has a melt viscosity of 2000 to 5000 centipoise at 275°C.
23. The thermoplastic resin composition for masterbatches according to any one of the above described 1 to 22, wherein the thermoplastic resin composition for masterbatches is in the form of chips with a height of 1 mm or more, a width of 1 mm or more and a length of 1 mm or more.
24. A method of producing a molding material in the form of chips, comprising:
   discharging, from a spinneret, the thermoplastic resin composition for masterbatches according to any one of the above described 1 to 23 to form a rod-shaped molten polymer;
   solidifying the rod-shaped molten polymer with cooling water; and
   then cutting the solidified polymer.
25. The method according to the above described 24, further comprising cooling, with air for 0.1 to 0.6 seconds, the rod-shaped molten polymer discharged from the spinneret before solidifying it with cooling water.
26. A thermoplastic resin composition, comprising:
   0.5 to 90% by weight of the thermoplastic resin composition for masterbatches according to any one of the above described 1 to 23; and
   a thermoplastic resin whose type is the same as or different from the type of the thermoplastic resin used in the thermoplastic resin composition for masterbatches.
27. A method of producing a thermoplastic resin composition, comprising mixing 0.5 to 90% by weight of the thermoplastic resin composition for masterbatches according to any one of the above described 1 to 23 with a thermoplastic resin whose type is the same as or different from the type of the thermoplastic resin used in the thermoplastic resin composition for masterbatches.

### Effects of the Invention

According to the invention, a thermoplastic resin composition for masterbatches is prepared that contains a thermoplastic resin and an organophosphorus compound such as DOP, a DOP derivative or CPPA in an amount that provides a high phosphorus content based on the amount of the thermoplastic resin. Such a thermoplastic resin composition for masterbatches contains phosphorus at a concentration of 5000 ppm or more. Such a thermoplastic resin composition for masterbatches can be easily and uniformly mixed with the same type or different types of thermoplastic resins (base resins). Thus, there can be provided a thermoplastic resin composition that has no problem with the melt viscosity adjustment even with high phosphorus content, and the thermoplastic resin composition allows easy adjustment of chip shape, and has formability and processibility as good as conventional techniques. Since the present thermoplastic resin composition for masterbatches has high phosphorus content, it can provide desired phosphorus contents for the same type or a different type of thermoplastic resin (base resin) and can form a thermoplastic resin composition with good flame retardancy. The resulting thermoplastic resin composition causes little bleeding out of the organophosphorus compound. Since the resulting thermoplastic resin composition contains an organophosphorus compound, it also has good antimicrobial properties.

The thermoplastic resin composition for masterbatches of the invention has high whiteness and high resistance to discoloration. Thus, the thermoplastic resin composition obtained by mixing the thermoplastic resin composition for masterbatches of the invention with the same type or a different type of thermoplastic resin (base resin) has good transparency and good color tone. Particularly in the thermoplastic resin composition for masterbatches having the organophosphorus compound such as a DOP derivative compound or CPPA incorporated in a thermoplastic resin by copolymerization or the like, the organophosphorus compound is integrated with the thermoplastic resin. Thus, such a thermoplastic resin composition has good dispersibility with the same type or a different type of thermoplastic resin (base resin) and can be uniformly mixed with the same type or a different type of thermoplastic resin (base resin) to form a thermoplastic resin with good transparency.

### Best Mode for Carrying Out the Invention

The invention will be described in more detail below. The invention uses the organophosphorus compound (DOP) represented by General Formula (1) and/or the organophosphorus compound represented by General Formula (2). The organophosphorus compound represented by General Formula (2) can be derived from the organophosphorus compound (DOP) represented by General Formula (1). These organophosphorus compounds can be used in the form of a mixture with a thermoplastic resin.

In General Formula (1) or (2), for example, the organic group R¹ or R² is exemplified any of various groups including a straight or branched chain alkyl group of about 1 to about 4 carbon atoms, an aryl group such as phenyl, an aralkyl group such as benzyl, a hydrocarbon group such as cycloalkyl, an alkoxyl or aryloxy group derived from a hydrocarbon group such as the alkyl, aryl or aralkyl group, and a carboxyl group or any ester group thereof, and the halogen atom is exemplified a chlorine atom, a bromine atom, or the like.

The organophosphorus compound represented by General Formula (2) and derived from DOP can be synthesized, for example, by a method of subjecting DOP to a Michael addition reaction with an α,β-unsaturated carboxylic acid compound, a method of subjecting DOP to addition reaction with an aldehyde compound, a carbonyl compound or the like, a method of subjecting DOP to addition reaction with an oxirane compound, a method of allowing DOP to react with an aromatic compound capable of undergoing Friedel-Crafts reaction, such as a phenolic compound, or a method of allowing DOP to react with a compound having a hydroxyl group or the like capable of undergoing dehydration and condensation.

In General Formula (2), the organic group (A) can be any group and is not limited to a group directly introduced to the derivative. If the organic group (A) has a functional group in General Formula (2) (as shown in General Formula (3)), the organic group (A) contains a functional group that is formed by a process including the steps of introducing an organic group (A) with a functional group to DOP and performing a reaction between the functional group and an organic compound or the like during or after the introduction.

Alternatively, the invention uses the organophosphorus compound represented by General Formula (3). The compound represented by General Formula (3) has a functional group on the organic group (A) as shown in General Formula (2) and can be incorporated into a thermoplastic resin through the functional group. The functional group can be derived from a functional group-containing monomer material depending on the type of the thermoplastic resin. In a case where the thermoplastic resin is polyester resin, the functional group is preferably an ester-forming functional group such as a carboxyl group, a carboxylate ester group such as an alkyl ester, aryl ester, or cycloalkyl ester of the carboxyl group, a hydroxyl group or a hydroxyalkoxycarbonyl group. The compound represented by General Formula (3) preferably has at least two functional groups, if the compound is copolymerized into a thermoplastic resin. Examples of the organophosphorus compound represented by General Formula (3) having the organic group (B) includes the compounds represented by Chemical Formulas (a) to (z) and (z1) to (z4), respectively, as shown below.

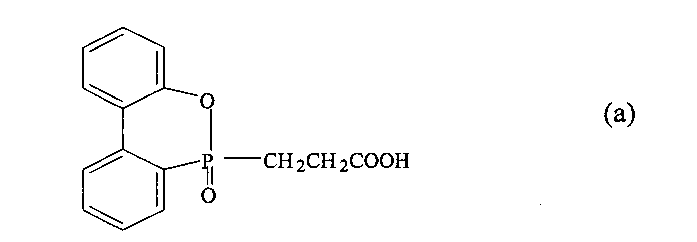

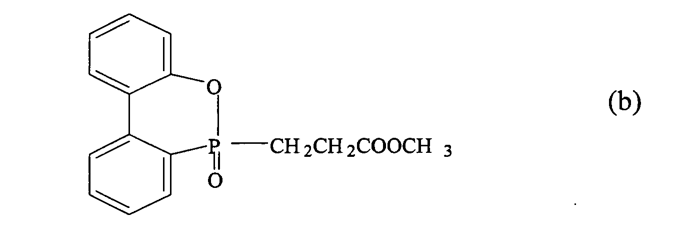

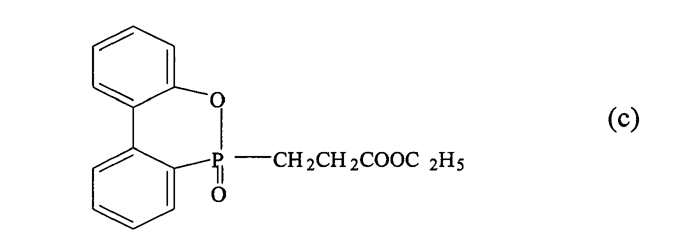

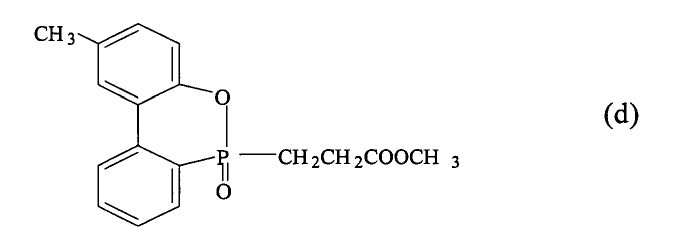

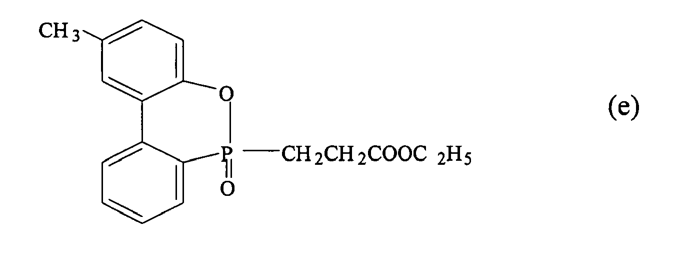

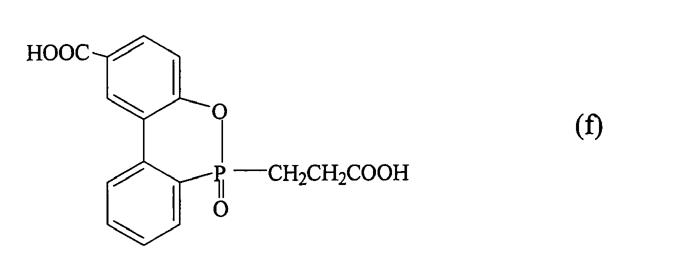

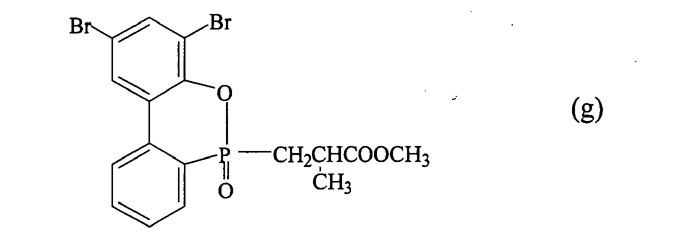

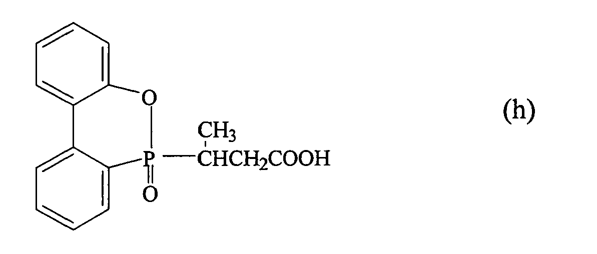

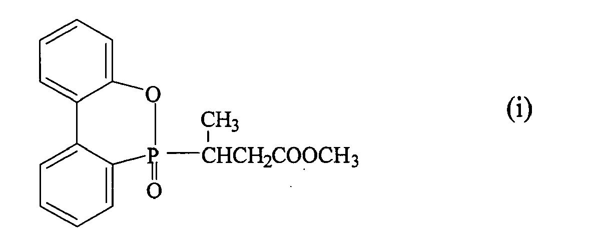

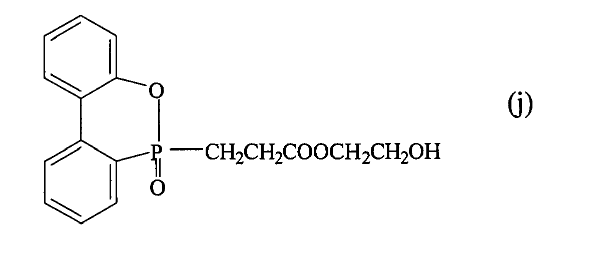

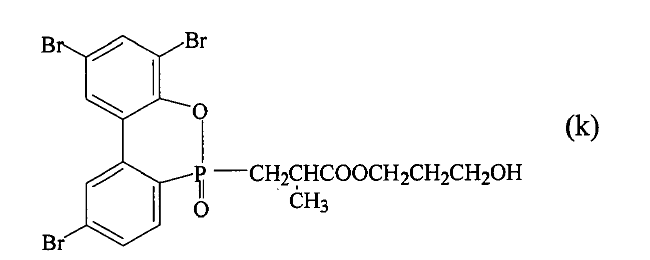

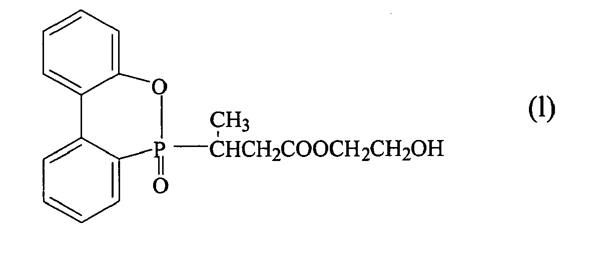

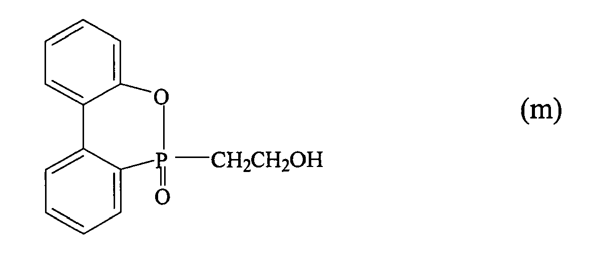

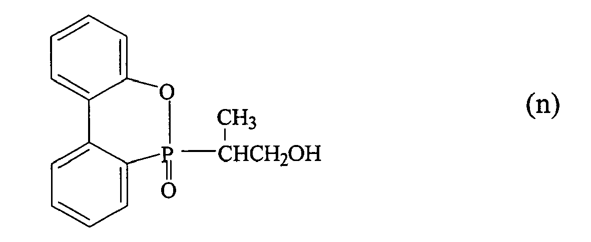

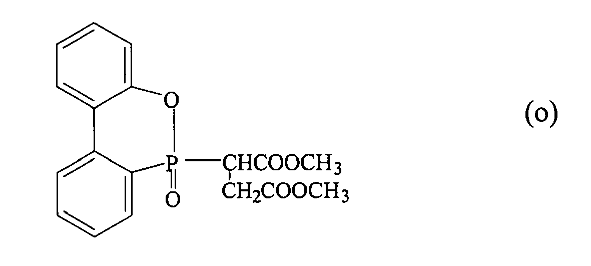

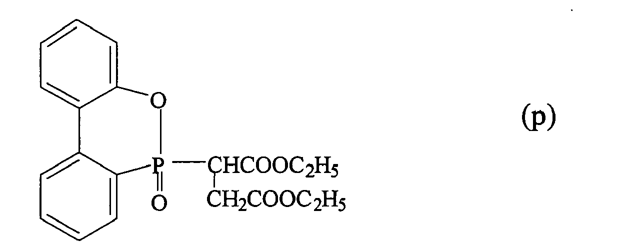

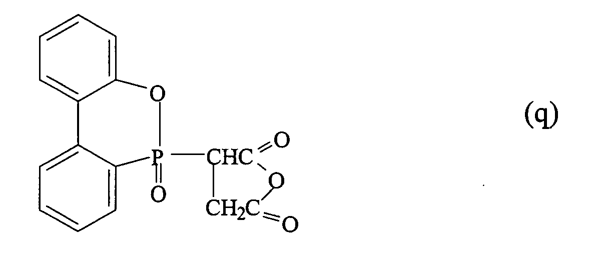

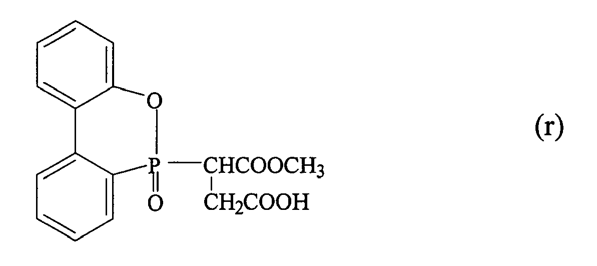

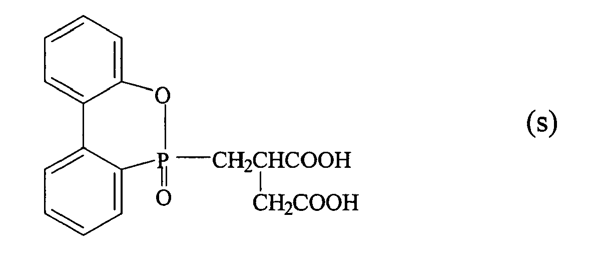

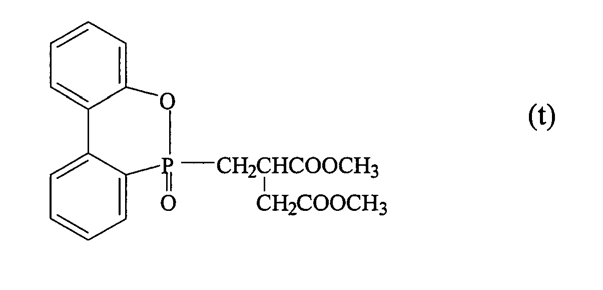

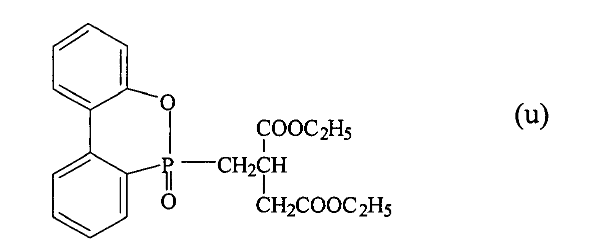

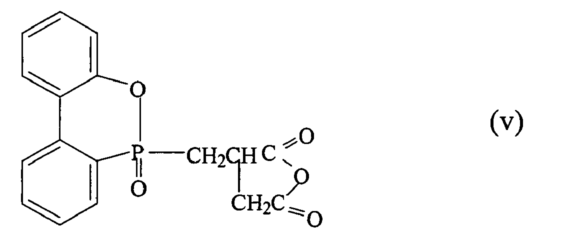

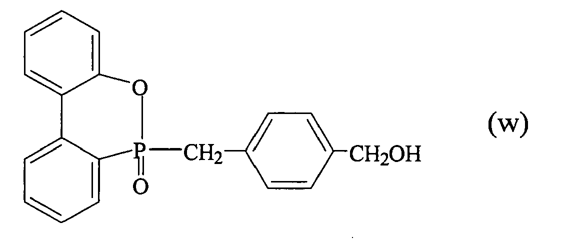

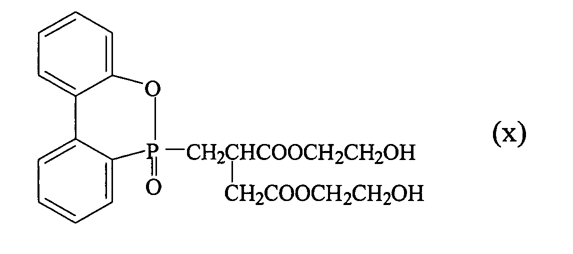

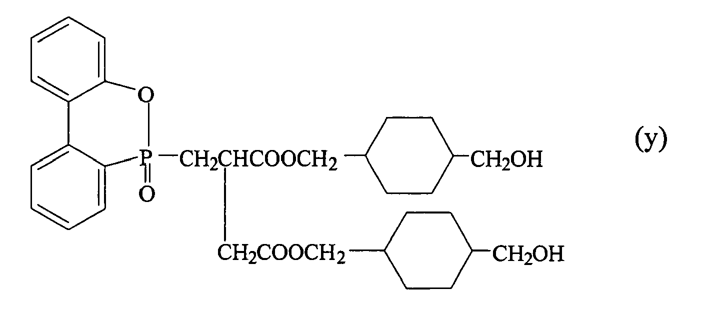

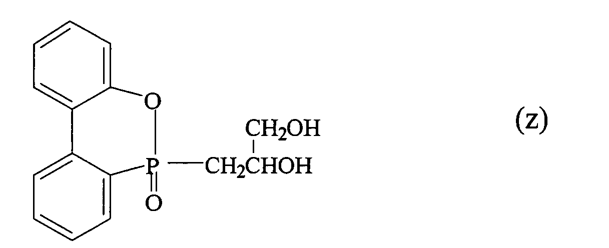

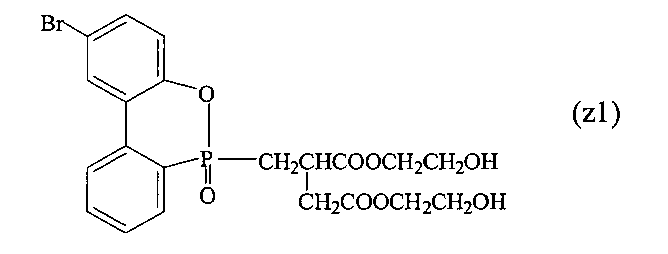

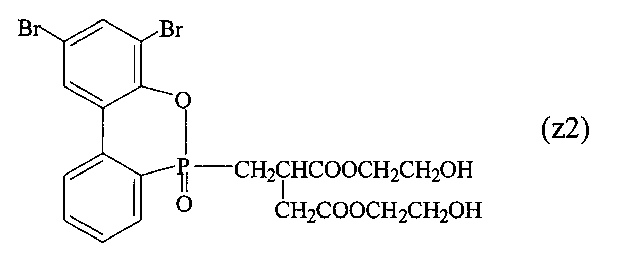

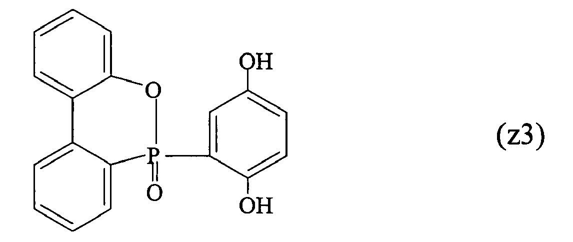

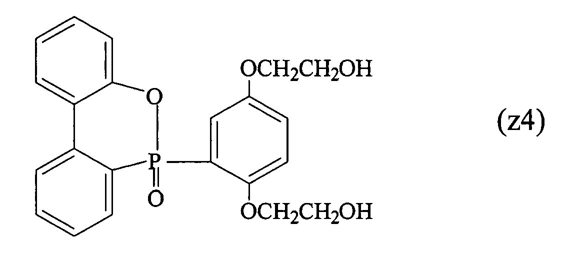

Alternatively, the invention uses the organophosphorus compound represented by General Formula (4). Examples of the monovalent organic group R³ of 1 to 18 carbon atoms in General Formula (4) include lower alkyl groups such as methyl, ethyl, n-propyl, isopropyl, n-butyl, tertiary butyl, n-hexyl, and n-octyl; aryl groups such as phenyl, 1-naphthyl, and 2-naphthyl; aralkyl groups such as benzyl; and cycloalkyl groups such as cyclopentyl and cyclohexyl. These hydrocarbon groups may be substituted with a halogen atom or atoms. R⁴ is a monovalent functional group. The organophosphorus compound can be incorporated into a thermoplastic resin through the functional group. The functional group can be derived from a functional group-containing monomer material depending on the type of the thermoplastic resin. In a case where the thermoplastic resin is polyester resin, the functional group is preferably an ester-forming functional group such as a carboxyl group, a carboxylate ester group such as an alkyl ester, aryl ester, or cycloalkyl ester of the carboxyl group, a hydroxyl group, a hydroxyl group, or a hydroxyalkoxycarbonyl group. A¹ is a bivalent organic group of 1 to 18 carbon atoms. Preferred examples of A¹ include alkylene groups such as methylene, ethylene, 1,2-propylene, and 1,3-propylene; arylene groups such as 1,3-phenylene and 1,4-phenylene; cycloalkylene groups such as 1,3-cyclohexylene and 1,4-cyclohexylene; and 1,3-xylylene and 1,4-xylylene.

Examples of the organophosphorus compound represented by General Formula (4) include (2-carboxyethyl)methylphosphinic acid, (2-carboxyethyl)phenylphosphinic acid, (2-methoxycarbonylethyl)methylphosphinic acid, (2-methoxycarbonylethyl)phenylphosphinic acid, (2-hydroxyethoxycarbonylethyl)methylphosphinic acid, (2-hydroxyethoxycarbonylethyl)phenylphosphinic acid, (4-carboxyphenyl)phenylphosphinic acid, and (2-hydroxyethyl)phenylphosphinic acid. The organophosphorus compound represented by General Formula (4) can be synthesized by known methods such as the method described in H. G. Henning und G. Hilgetag, J. Prakt. Chem. 29, 86(1965) and the method described in V. K. Chajrullin et al., Z. Obsc. Chim. 37(1967) Nr3, S. 710-714.

The organophosphorus compound is preferably in the form of a fine powder with a bulk density of 2 cm³/g or less. The fine powder of the organophosphorus compound can provide high concentrations of phosphorus for thermoplastic resins so that the resulting thermoplastic resin composition for masterbatches can have improved transparency and discoloration properties. The bulk density is preferably 2 cm³/g or less in terms of easy handling and high weighting accuracy so that good miscibility with thermoplastic resins and high productivity can be achieved. The bulk density is preferably 1.9 cm³/g or less, more preferably 1.8 cm³/g or less. The organophosphorus compound can be formed into a fine powder by any method such as pulverization.

The thermoplastic resin composition for masterbatches (I) of the invention includes the organophosphorus compound represented by General Formula (1) and/or the organophosphorus compound represented by General Formula (2) or the organophosphorus compound represented by General Formula (4), and a thermoplastic resin and is adjusted so as to contain 5000 ppm or more of phosphorus derived from the organophosphorus compound(s). Any method may be used to add the organophosphorus compound(s) to the thermoplastic resin. For example, a method of mixing the thermoplastic resin and the organophosphorus compound(s) can be used. Any general mixing technique can be used in the mixing method.

The thermoplastic resin composition for masterbatches (II) of the invention includes a thermoplastic resin in which the organophosphorus compound represented by General Formula (3) or the organophosphorus compound represented by General Formula (4) is incorporated as a constituent, and it is adjusted so as to contain 5000 ppm or more of phosphorus. The organophosphorus compound represented by General Formula (3) or the organophosphorus compound represented by General Formula (4) can be incorporated as a constituent in the thermoplastic resin by copolymerization or the like.

In the case of any of the thermoplastic resin composition for masterbatchess (I) and (II), the phosphorus content can be varied so that an optimal amount of phosphorus can be freely added to the same type or a different type of thermoplastic resin to impart flame retardancy. A phosphorus content of less than 5000 ppm is not preferred, because such a content will not produce the desired effect. The phosphorus content is preferably from 5000 to 60000 ppm, more preferably from 10000 to 50000 ppm, still more preferably from 15000 to 45000 ppm.

Examples of the thermoplastic resin used in the thermoplastic resin composition for masterbatches include polyolefin resins, polystyrene resins, acrylonitrile-butadiene-styrene copolymer resins, acrylonitrile-styrene copolymer resins, methacrylic acid-styrene copolymer resins, methacrylic resins, butadiene-styrene copolymer resins, polycarbonate resins, polyamide resins, polyarylate resins, polysulfone resins, polyarylsulfone resins, polyethersulfone resins, polyetherimide resins, polyimide resins, polyester resins such as polyethylene terephthalate, polybutylene terephthalate, polytrimethylene terephthalate, and polylactic acid, polyester-carbonate resins, polyester-ether resins, and polyurethane resins, or alloy resins thereof.

The thermoplastic resin is preferably a polyester resin such as polyethylene terephthalate, polybutylene terephthalate, polytrimethylene terephthalate, and polylactic acid, a polyarylate resin, a polyester-ether resin, a polyamide resin, or the like.

In particular, the thermoplastic resin is preferably a polyester resin. The polyester resin is preferably composed of: a terephthalic acid or a naphthalenedicarboxylic acid such as 1,3-naphthalenedicarboxylic acid, 1,4-naphthalenedicarboxylic acid, 1,5-naphthalenedicarboxylic acid, 2,6-naphthalenedicarboxylic acid, or 2,7-naphthalenedicarboxylic acid, as a main acid component; and at least one glycol, preferably at least one alkylene glycol selected from ethylene glycol, trimethylene glycol and tetramethylene glycol, as a main glycol component. In the polyester, the terephthalic acid component or the naphthalenedicarboxylic acid component may be partially replaced with any other bifunctional carboxylic acid component, and/or the glycol component may be partially replaced with any of the above glycol components as a non-main component or partially replaced with any other diol component.

In the polyester resin, at least 80% by mole of the repeating unit is particularly preferably an ethylene terephthalate unit or an ethylene naphthalate unit.

Examples of the polyester-resin-forming dicarboxylic acid other than the above include saturated aliphatic dicarboxylic acids such as oxalic acid, malonic acid, succinic acid, glutaric acid, adipic acid, pimelic acid, suberic acid, azelaic acid, sebacic acid, decanedicarboxylic acid, dodecanedicarboxylic acid, tetradecanedicarboxylic acid, hexadecanedicarboxylic acid, 1,3-cyclobutanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, and 2,5-norbornanedicarboxylic acid, or any ester-forming derivatives thereof; unsaturated aliphatic dicarboxylic acids such as fumaric acid, maleic acid, itaconic acid, and dimer acid, or any ester-forming derivatives thereof; and aromatic dicarboxylic acids such as orthophthalic acid, isophthalic acid, 5-(alkali metal)sulfoisophthalic acid, diphenic acid, 4,4'-biphenyldicarboxylic acid, 4,4'-biphenylsulfonedicarboxylic acid, 4,4'-biphenyletherdicarboxylic acid, 1,2-bis(phenoxy)ethane-p,p'-dicarboxylic acid, and anthracenedicarboxylic acid, or any ester-forming derivatives thereof. In the invention, terephthalic acid and naphthalenedicarboxylic acid, particularly 2,6-naphthalenedicarboxylic acid are preferred.

Examples of polycarboxylic acids other than these dicarboxylic acids include ethanetricarboxylic acid, propanetricarboxylic acid, butanetetracarboxylic acid, pyromellitic acid, trimellitic acid, trimesic acid, 3,4,3',4'-biphenyltetracarboxylic acid, and any ester-forming derivatives thereof.

Examples of the polyester-resin-forming glycol component include aliphatic glycols such as ethylene glycol, 1,2-propylene glycol, 1,3-propylene glycol, diethylene glycol, triethylene glycol, 1,2-butylene glycol, 1,3-butylene glycol, 2,3-butylene glycol, 1,4-butylene glycol, 1,5-pentanediol, neopentylglycol, 1,6-hexanediol, 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, 1,4-cyclohexanediethanol, 1,10-decamethylene glycol, 1,12-dodecanediol, polyethylene glycol, polytrimethylene glycol, and polytetramethylene glycol; and aromatic glycols such as hydroquinone, 4,4'-dihydroxybisphenol, 1,4-bis(β-hydroxyethoxy)benzene, 1,4-bis(β-hydroxyethoxyphenyl)sulfone, bis(p-hydroxyphenyl)ether, bis(p-hydroxyphenyl)sulfone, bis(p-hydroxyphenyl)methane, 1,2-bis(p-hydroxyphenyl)ethane, bisphenol A, bisphenol C, 2,5-naphthalenediol, and ethylene oxide adducts of any of the above glycols. Among these glycols, ethylene glycol and 1,4-butylene glycol are preferred.

Examples of polyhydric alcohols other than these glycols include trimethylolmethane, trimethylolethane, trimethylolpropane, pentaerythritol, glycerol, and hexanetriol.

Examples of the polyester-resin-forming hydroxycarboxylic acid include lactic acid, citric acid, malic acid, tartaric acid, hydroxyacetic acid, 3-hydroxybutyric acid, p-hydroxybenzoic acid, p-(2-hydroxyethoxy)benzoic acid, and 4-hydroxycyclohexanecarboxylic acid, or any ester-forming derivatives thereof.

Examples of cyclic esters include ε-caprolactone, β-propiolactone, β-methyl-β-propiolactone, 8-valerolactone, glycolide, and lactide.

Examples of the ester-forming derivatives of the polycarboxylic acid or the hydroxycarboxylic acid include alkyl esters, acid chlorides, and acid anhydrides thereof.

The method of producing the polyester resin does not have to employ special polymerization conditions. The polyester resin can be synthesized by any method that has been employed to polymerize and condense the reaction product between a dicarboxylic acid(s) and/or an ester-forming derivative(s) thereof and glycol into a polyester resin(s). The organophosphorus compound represented by General Formula (3) (wherein B is an organic group having an ester-forming functional group) or the organophosphorus compound represented by General Formula (4) (wherein R⁴ is an ester-forming functional group) is added when the polyester resin is produced, although the addition may be performed at any stage from the initial stage of the esterification to a late stage of the initial condensation.

In a case where the organophosphorus compound represented by General Formula (4) is copolymerized into the polyester resin, it is preferred that the organophosphorus compound should be allowed to react with a basic organic compound in advance and then added. Examples of the basic organic compound include amine compounds such as triethylamine, tri-n-butylamine, cyclohexylamine, pyridine, aniline, and dimethylaniline; organic salts of acetic acid such as triethylamine acetate, cyclohexylamine acetate, and pyridine acetate; and carboxylic acid amides such as dimethylformamide and dimethylacetamide. The reaction with the organophosphorus compound may be performed either with no solvent or in a solvent. Preferably, in view of the addition process, it is advantageous to allow the organophosphorus compound to react in diol or an ester-forming derivative thereof, a material for polyester production. A metal salt such as sodium hydroxide and sodium acetate is not preferred as the basic compound, because a metal salt of the acid component such as terephthalic acid can precipitate to form a cloudy polymer when polyester is produced.

Any known polyester resin polymerization catalyst can be used such as antimony compounds, germanium compounds, titanium compounds, magnesium compounds, calcium compounds, zinc compounds, cobalt compounds, zirconium compounds, manganese compounds, sodium compounds, lithium compounds, potassium compounds, and aluminum compounds. Among these compounds, for suppression of darkening, germanium compounds or aluminum compounds, particularly germanium compounds are preferably used as the catalyst.

Any general method can be used to produce a molding material in the form of chips (pellets) from the thermoplastic resin composition for masterbatches (I) or (II) of the invention.

It should be noted that if the organophosphorus compound represented by General Formula (3) or the organophosphorus compound represented by General Formula (4) is copolymerized as a component into the thermoplastic resin, particularly into the polyester resin, to form the thermoplastic resin composition for masterbatches (II), a high content of phosphorus in the thermoplastic resin can tend to cause a reduction in crystallization speed and to cause an amorphous form. In such a case, therefore, it is preferred that solidification with cooling water should be performed after the completion of the copolymerization and that optimization conditions should be selected for cutting into chips. After the completion of the reaction, a rod-shaped molten polymer with high phosphorus content is discharged from a spinneret, and the discharged polymer is preferably held in cooling air before solidified with cooling water. Before immersion into cooling water, air cooling is preferably maintained for a time period of 0.1 to 0.6 seconds, more preferably of 0.15 to 0.5 seconds, still more preferably of 0.2 to 0.3 seconds. If the air cooling time is less than 0.1 seconds, it can be sometimes difficult to prevent fusion between pellets in a drying process before molding, and sometimes the fusion can be facilitated. If the air cooling time is more than 0.6 seconds, the rod-shaped polymers discharged from small orifices can tend to adhere to one another in cooling air or cooling water due to swinging of the rod-shaped polymers and the like, and sometimes can form fused pellets when the rods are cut. Such fused pellets cannot be subjected to the drying process. The reason for selecting the air cooling time is further discussed below. Though, the discharged molten polymer, whose temperature is higher than the melting point of the polyester resin (generally about 260°C in the case of polyethylene terephthalate), at least the surface of the polymer is instantly cooled to near 100°C and solidified without crystallization in water.

Any type of air may be used for cooling. Room air with controlled temperature or humidity can be used. Air controlled flow rate also can be used. An air temperature of 5 to 50°C is preferably used in terms of economy of energy for air temperature control.

The air-cooled linear polymer is brought into contact with cooling water to be solidified and then cut into a molding material in the form of pellets. The temperature of cooling water is preferably from 5 to 40°C. In general, a method of cutting in cooling water is preferably used such that the cooling water serves to transport pellets. In the invention, these conditions are selected so that even a polymer tending to be amorphous can be solidified by a sufficient cooling effect.

The thermoplastic resin composition for masterbatches (I) or (II) of the invention may contain a bivalent metal compound. The bivalent metal compound is preferably added such that the content of the bivalent metal is from 1 to 250 ppm based on the amount of the organophosphorus compound represented by General Formula (1), General Formula (2), General Formula (3), or General Formula (4) (1 ≤ the content of the bivalent metal ≤ 250 ppm). The bivalent metal compound contained within the range can well maintain the color tone of the thermoplastic resin. For example, a description is provided below of a case where the thermoplastic resin is a polyester resin. Specifically, if there is existing 1 ppm or more of the bivalent metal compound, the bivalent metal compound, which is more reducible than the antimony compound catalyst, can be predominantly reduced so that darkening can be suppressed, which would otherwise be caused by the reduction product of the antimony compound. On the other hand, if the content of the bivalent metal is high, the bivalent metal can easily form a complex with the organophosphorus compound to form an insoluble product and can cause an extraordinary material, for example, in the process of molding polyester and thus tend to reduce the operating performance. Thus, the content of the bivalent metal based on the amount of the organophosphorus compound is from 1 ppm to 250 ppm. The content of the bivalent metal is preferably from 1 ppm to 150 ppm, more preferably from 5 ppm to 100 ppm.

Any preparation method can be used to add the bivalent metal compound to the thermoplastic resin composition for masterbatches, as long as the specific amount of the bivalent metal compound can be added based on the amount of the organophosphorus compound. For example, any preparation method can be used as long as the specific amount of the bivalent metal compound can be added based on the amount of the organophosphorus compound (DOP) represented by General Formula (1), and the specific amount of the bivalent metal compound may be contained as an impurity in DOP as a result of the DOP production, or the bivalent metal compound may be separately added to DOP so as to provide the specific amount of the bivalent metal compound in the preparation. The composition containing the specific amount of the bivalent metal compound based on the amount of the organophosphorus compound represented by General Formula (2) or General Formula (3) can be prepared by deriving the organophosphorus compound represented by General Formula (2) or General Formula (3) from the organophosphorus compound (DOP) represented by General Formula (1) in the composition containing the specific amount of the bivalent metal compound or by separately adding the specific amount of the bivalent metal compound. A method of adding the bivalent metal compound to the thermoplastic resin composition for masterbatches can also be employed such that the specific amount of the bivalent metal can be provided.

Similarly to the above, any preparation method can be used to add the bivalent metal compound to the thermoplastic resin composition for masterbatches, as long as the specific amount of the bivalent metal compound can be added based on the amount of the organophosphorus compound represented by General Formula (4). For example, the specific amount of the bivalent metal compound can be contained as an impurity in the compound as a result of the production of the compound, or the bivalent metal compound may be separately added to the compound so as to provide the specific amount of the bivalent metal compound in the preparation. A method of adding the bivalent metal compound to the thermoplastic resin composition for masterbatches can also be employed such that the specific amount of the bivalent metal can be provided.

Examples of the bivalent metal compound include various compounds of zinc compounds, manganese compounds, magnesium compounds, calcium compounds, barium compounds, copper compounds, iron compounds, and cobalt compounds. In particular, zinc compounds are preferred.

The methods disclosed in JP-A Nos. 2001-172290, 2001-172291 and 2001-172377 are preferably used to prepare DOP with a zinc content in the specific range. The methods disclosed in the publications are easier than the method of completely removing the catalyst residue for purification after the synthesis of DOP and are advantageous in terms of simplifying the purification process after the synthesis of DOP.

The thermoplastic resin composition for masterbatches (I) or (II) of the invention can contain a weather-resistance-imparting agent. The weather-resistance-imparting agent can form a thermoplastic resin composition with higher resistance to discoloration. The weather-resistance-imparting agent is preferably at least one compound selected from hindered amine compounds, nitrogen-containing hindered phenolic compounds, metal salt hindered phenolic compounds, phenolic compounds, hindered phenolic compounds, and sulfur compounds.

As mentioned above, when the thermoplastic resin composition for masterbatches, particularly the composition (II), is cut into chips, high phosphorus content can make the melting point significantly low and make the cutting difficult. In contrast, the addition of the weather-resistance-imparting agent makes the cutting into chips easy and allows cutting into uniform shapes. The weather-resistance-imparting agent is effectively used, when the thermoplastic resin composition for masterbatches has a limiting viscosity of 0.4 or more, further of 0.5 or more, and has a phosphorus content of 10000 ppm or more, further of 15000 ppm or more, still further of 20000 ppm or more.

Examples of the hindered amine compound serving as the additive for use in combination include poly[{(6-(1,1,3,3-tetramethylbutyl)imino-1,3,5-triazine-2,4-diyl){(2,2,6,6-tetramethyl-4-piperidyl)imino}hexamethylene{(2,2,6,6-tetramethyl-4-piperidyl)imino}}](Chimassorb 944LD (trade name) manufactured by Ciba Specialty Chemicals Inc.), a polycondensate of dimethyl succinate and 1-hydroxyethyl-4-hydroxy-2,2,6,6-tetramethylpiperidine(Tinuvin 622LD (trade name) manufactured by Ciba Specialty Chemicals Inc.), bis(1,2,2,6,6-pentamethyl-4-piperidinyl)-2-n-butyl-2-(3,5-di-tert-butyl-4-hydroxybenzyl)malonate (Tinuvin 144 (trade name) manufactured by Ciba Specialty Chemicals Inc.).

Examples of the nitrogen-containing hindered phenolic compound include 1,3,5-tris(4-tert-butyl-3-hydroxy-2,6-dimethylbenzyl)isocyanurate (Cyanox 1790 (trade name) manufactured by Cyanamid Japan Ltd.) and 1,3,5-tris(3,5-di-tert-butyl-4-hydroxybenzyl)isocyanurate (IRGANOX3114 (trade name) manufactured by Ciba Specialty Chemicals Inc.).

Examples of the metal salt hindered phenolic compound include calcium 3,5-di-tert-butyl-4-hydroxy-benzyl-mono-ethyl-phosphonate (IRGANOX1425WL (trade name) manufactured by Ciba Specialty Chemicals Inc.), nickel 3,5-di-tert-butyl-4-hydroxybenzyl-mono-ethyl-phosphonate (IRGASTAB 2002 (trade name) manufactured by Ciba Specialty Chemicals Inc.), and magnesium salts of the above compound.

Examples of the phenolic compound include 4-tert-butylcatechol, 1,3,5-trimethyl-2,4,6-tris(3,5-di-tert-butyl-4-hydroxyl)benzene (IRGANOX1330 (trade name) manufactured by Ciba Specialty Chemicals Inc.) and pentaerythrityl-tetrakis[3-(3,5-di-tert-butyl-4-hydroxyphenyl)propionate (IRGANOX1010 (trade name) manufactured by Ciba Specialty Chemicals Inc.).

Examples of the hindered phenolic compound include 2,6-di-tert-butyl-4-methylphenol (Sumilizer BHT (trade name) manufactured by Sumitomo Chemical Co., Ltd.), n-octadecyl-3-(3',5'-di-tert-butyl-4'-hydroxyphenyl)propionate, 2,2'-methylene-bis-(4-methyl-6-tert-butylphenol), 2-tert-butyl-6-(3'-tert-butyl-5'-methyl-2'-hydroxybenzyl)-4-methylphenylacrylate, 1,3,5-tris(4-tert-butyl-3-hydroxy-2,6-dimethylbenzyl)isocyanurate, tetrakis-[methylene-3-(3',5'-di-tert-butyl-4'-hydroxyphenyl)propionate]-methane (Sumilizer BP-101 (trade name) manufactured by Sumitomo Chemical Co., Ltd.), and [3,9-bis-[2-3-(3-tert-butyl-4-hydroxy-5-methylphenyl)propionyloxy]-1,1-dimethylethyl]-2,4,8,10-tetraoxaspiro[5,5]undecane.

Examples of the sulfur compound include dilauryl thiodipropionate (DLTDP), dimyristyl thiodipropionate, distearyl thiodipropionate (DSTDP), pentaerythritol-tetrakis-(β-laurylthiopropionate), and 2-mercaptobenzimidazole.

The amount of any of these weather-resistance-imparting agent is preferably 10 parts or less by weight, more preferably from 0.001 parts by weight to 10 parts by weight, still more preferably from 0.01 parts by weight to 1 part by weight, based on 100 parts by weight of the total thermoplastic resin(s) in the case of the thermoplastic resin composition for masterbatches (I) or based on 100 parts by weight of the thermoplastic resin in which the organophosphorus compound represented by General Formula (3) or General Formula (4) is incorporated as a constituent in the case of the thermoplastic resin composition for masterbatches (II).

Any method can be used at any time to add the weather-resistance-imparting agent to the thermoplastic resin composition for masterbatches (I) or (II). For example, the addition is possible at the time of each of the steps below. The addition in the step as early as possible is preferred in terms of suppressing thermal degradation, but the addition in Step (3) where discoloration can most easily occur is particularly preferred.
Step (1): the step of synthesizing the organophosphorus compound represented by General Formula (1) or General Formula (4)
Step (2): the step of mixing the organophosphorus compound represented by General Formula (1) or General Formula (4) with the thermoplastic resin composition to prepare the thermoplastic resin composition for masterbatches
Step (3): the step of derivatizing the organophosphorus compound represented by General Formula (1) into the organophosphorus compound represented by General Formula (2) or General Formula (3)
Step (4): the step of preparing the thermoplastic resin composition for masterbatches by mixing the organophosphorus compound represented by General Formula (2), General Formula (3) or General Formula (4) with the thermoplastic resin or by copolymerizing the organophosphorus compound represented by General Formula (3) or General Formula (4)
Step (5): the step of preparing a thermoplastic resin composition by mixing the thermoplastic resin composition for masterbatches obtained through Steps (1) to (4) with the same type or a different type of thermoplastic resin (base resin).

The addition of any of various types of the weather-resistance-imparting agents improves the whiteness of the thermoplastic resin composition for masterbatches (I) or (II) even with high phosphorus content.

The thermoplastic resin composition for masterbatches (I) or (II) can also contain a small amount of any other polymer, an antioxidant, an antistatic agent, a dyeing modifier, a dye, a pigment, a matting agent, a micropore-forming agent, an antimicrobial agent, a fluorescent brightening agent, or any other additive.

While the additive may be selected and used as needed, the fluorescent brightening agent is preferred in terms of effectively increasing the whiteness. Examples of the fluorescent brightening agent include Uvitex OB (manufactured by Ciba Specialty Chemicals Inc.), OB-1 (manufactured by Eastman Kodak Company) and Hostalux KS (manufactured by Clariant International Ltd.). While the additive may be added at any time, the fluorescent brightening agent is preferably added to the thermoplastic resin composition for masterbatches. The blending amount of the fluorescent brightening agent is preferably 1 part or less by weight, more preferably 0.1 parts or less by weight, still more preferably from 0.0001 parts by weight to 0.01 parts by weight, based on 100 parts by weight of the total thermoplastic resin(s) in the case of the thermoplastic resin composition for masterbatches (I) or based on 100 parts by weight of the thermoplastic resin in which the organophosphorus compound is incorporated as a constituent in the case of the thermoplastic resin composition for masterbatches (II).

The thermoplastic resin composition for masterbatches (I) or (II) preferably has a melt viscosity of 2000 to 5000 centipoise at 275°C in view of chip cutting and miscibility with thermoplastic resins. The melt viscosity is more preferably from 2500 to 4500 centipoise, still more preferably from 3000 to 4000 centipoise.

The molding material in the form of chips (pellets) produced from the thermoplastic resin composition for masterbatches (I) or (II) may have any shape. Flat plate shapes, flat columnar shapes, flat cylindrical shapes, or flat rectangular column shapes are general shapes. The smallest size part (thickness or diameter) is preferably 1 mm or more, and the largest size part (length) is preferably up to about 10 mm. The dimensions of the thermoplastic resin composition for masterbatches chip is 1 mm or more in height (minor axis), 1 mm or more in width (major axis), and 1 mm or more in length, preferably from 1 to 5 mm in height, from 1 to 5 mm in width, and from 1 to 8 mm in length. These chip dimensions facilitate melting and uniform mixing particularly when the chips are mixed with a different type of thermoplastic resin.

Chips with such dimensions can also easily and uniformly be cut even from the thermoplastic resin composition for masterbatches (I) or (II) with a high phosphorus content and with a limiting viscosity of 0.5 or more, 0.6 or more, further 1.3 or more. Even with a high phosphorus content, therefore, the thermoplastic resin composition for masterbatches (I) or (II) of the invention can be formed into chips in a conventional manner.

In addition, the molding material in the form of pellets produced from the thermoplastic resin composition for masterbatches (I) or (II) preferably has a moisture percentage of 0.1% or less by weight, more preferably of 0.05% or less by weight, still more preferably of 0.03% or less by weight. If the moisture percentage is 0.1% or less by weight, the composition is sufficiently dried and prevented from blocking or segregating.

The thermoplastic resin composition for masterbatches (I) or (II) of the invention is mixed with the same type or a different type of thermoplastic resin (base resin) to form a thermoplastic resin composition with a specific phosphorus content.

The thermoplastic resin composition for masterbatches (I) or (II) with the organophosphorus compound represented by General Formula (1), General Formula (2) or General Formula (3) preferably has an L value (whiteness) of 25 or more, more preferably of 30 or more, 40 or more, 45 or more, where the L value is measured with a Hunter color-difference meter. Thus, the thermoplastic resin composition for masterbatches (I) or (II) of the invention has a high L value and good whiteness. In addition, the thermoplastic resin composition for masterbatches (I) or (II) causes little discoloration and has good resistance to discoloration. The b value measured with a Hunter color-difference meter is preferably 25 or less, more preferably 20 or less, 15 or less, 10 or less. Thus, even after the thermoplastic resin composition for masterbatches (I) or (II) is mixed with the same type or a different type of thermoplastic resin (base resin), the whiteness of the resulting thermoplastic resin composition is almost the same as that of the normal thermoplastic resin (base resin) before the mixing.

The thermoplastic resin composition for masterbatches (I) or (II) with the organophosphorus compound represented by General Formula (4) preferably has an L value (whiteness) of 40 or more, more preferably of 45 or more, where the L value is measured with a Hunter color-difference meter. Thus, the thermoplastic resin composition for masterbatches (I) or (II) of the invention has a high L value and good whiteness. In addition, the thermoplastic resin composition for masterbatches (I) or (II) causes little discoloration and has good resistance to discoloration. The b value measured with a Hunter color-difference meter is preferably 15 or less, more preferably 10 or less. Thus, even after the thermoplastic resin composition for masterbatches (I) or (II) is mixed with the same type or a different type of thermoplastic resin (base resin), the whiteness of the resulting thermoplastic resin composition is almost the same as that of the normal thermoplastic resin (base resin) before the mixing.

While the amount of the thermoplastic resin composition for masterbatches is appropriately adjusted depending on the desired content of phosphorus in the resulting thermoplastic resin composition, in general, it is preferably from 0.5 to 90% by weight, more preferably from 1 to 50% by weight, still more preferably from 10 to 30% by weight of the resulting thermoplastic resin composition. While the resulting thermoplastic resin composition may have any phosphorus content, the content of phosphorus in the resulting thermoplastic resin composition is effectively of 1000 ppm or more, more effectively 2000 ppm or more, still more effectively 4000 ppm or more. Conventionally, it has been difficult to mold and process thermoplastic resin compositions with phosphorus contents in the above range. In contrast, the molding and processing can easily be performed according to the invention.

Examples of the same type or a different type of thermoplastic resin (base resin) include those of the thermoplastic resin used in the thermoplastic resin composition for masterbatches. The thermoplastic resin composition for masterbatches is preferably adapted to the same type of thermoplastic resin (base resin). In a case where a polyester resin is used as the thermoplastic resin in the thermoplastic resin composition for masterbatches, a polyester resin is also preferably used as the thermoplastic resin (base resin).

### Examples

The invention will be specifically described using the examples below, which are not intended to limit the scope of the invention. In each example, "part or parts" and "%" are both by weight. The respective evaluation values are determined by the methods below.

### (Physical Properties and Other Properties of Thermoplastic Resin Composition for Masterbatches)

(1) Element Content: Zinc metal content and phosphorus content were measured by atomic absorption analysis.
(2) Limiting Viscosity: Measurement was performed at 30°C in a phenol/1,1,2,2-tetrachloroethane (3/2 in weight ratio) mixture solution.
(3) Melt Viscosity: Measurement was performed using Capirograph (IC type) manufactured by Toyo Seiki Seisaku-sho, Ltd. The inner diameter of the barrel was 10 mm. The barrel was charged with a sample under a stream of nitrogen. The sample charge was completed within 30 seconds. The measurement was started three minutes after the sample charge and then completed within three minutes. The measurement was performed using a die with an inner diameter of 1 mm. For pipe length correction, dies with pipe lengths of 10 mm, 20 mm and 40 mm were used, respectively. The measurement was performed at a temperature of 275°C and at cylinder speeds of 0.5, 1, 5, 10, 50, 100, and 500 mm/minute with respect to each die. With respect to the measurement results, Bagley plot was used to produce end correction values of pressure difference, and the pressure difference was corrected. Trouton's melt viscosities were calculated based on the formulae below. Trouton's melt viscosity measurements were obtained according to the formula: melt viscosity η=τw/γw, wherein τw is shear pressure and γw is shear rate, respectively, which were obtained by experiment and calculation. According to the formula γw=32Q/(πD³), wherein Q is discharge rate (cm³/minute) and D is nozzle hole diameter (cm), respectively, γw was obtained. According to the formula τw=ΔP/4(L/D), wherein ΔP is nozzle back pressure (kgf/cm²) and L is nozzle land length (cm), respectively, τw was obtained.
(4) Moisture Percentage (%) after Passing through Evaporation Apparatus: Measurement was performed using a Karl Fischer moisture titrator.
(5) Color Values: Polyester chips were measured with a Hunter color-difference meter. Greater L values indicate stronger whiteness, and greater b values indicate stronger yellowness.
(6) Transparency: The resulting resin composition was dissolved in hexafluoroisopropanol to form a 10g/100 ml solution, which was measured at room temperature (23°C) with a turbidimeter NDH 2000 (Nippon Denshoku Industries Co., Ltd.). The measurement method was according to Japanese Industrial Standard No. JIS-K7105, in which a cell with a cell length of 1 cm was used, and diffused transmitted light (DF) through the solution and total transmitted light (TT) were measured. Haze (%) was calculated according to the formula: Haze (%)=(DF/TT)× 100. Haze is preferably 10% or less, more preferably 5% or less.

### (Physical Properties and Other Properties of Base-Resin-Containing Thermoplastic Resin Composition)

(7) Flame Retardancy: Limiting oxygen index (LOI) was used for evaluation according to Japan Fire Safety Regulation No. 65. Evaluation was also performed according to the JIS-L-1091D method. If contact with flame is possible three times or more, that is evaluated as successful.
(8) Dispersibility: The haze (%) of the film was used to evaluate the dispersibility. The film stored at room temperature (23°C) was measured with a haze meter (Model NDH2000 manufactured by Nippon Denshoku Industries Co., Ltd.). The measurements were converted into haze values for 100 pm sheet thickness according to the formula: Haze (%)=(measured haze (%))x(100/A), wherein A is film thickness (pm). The haze is preferably 5% or less, more preferably 3% or less.

### Reference Example 1

### (Synthesis of Organophosphorus Compound)

To 1000 parts of crude orthophenylphenol (OPP) with a purity of 95% was added 4.9 parts of toluene. The mixture was stirred at room temperature for about one hour, and the supernatant was removed. To a reaction pot were added 1000 parts of orthophenylphenol and 1009 parts of phosphorus trichloride (1:1.25 in molar ratio), mixed at room temperature for one hour, and heated to 150°C over five hours so that hydrogen chloride was generated. Thereto was added 5.9 parts of zinc chloride and allowed to react at 200°C for four hours to obtain 6-chloro-(6H)-dibenzo-(c,e)(1,2)-oxaphosphorine (DOP-X).

To the resulting DOP-X was added 500 parts of toluene and stirred at room temperature for about one hour, and the supernatant was removed for purification of DOP-X._

Thereto was also added 77 parts of water such that the molar ratio of the water to the orthophenylphenol was 1:1, and 1000 parts of toluene was further added. Hydrolysis was performed under reflux, and the generated hydrogen chloride gas was removed.

Then, 1000 parts of hot water at a temperature of 50 to 60°C was added. After stirring, the water layer was separated, and washing with 500 parts of water was performed three times. The oil layer was dehydrated by azeotropy and then treated with activated carbon. Then, 2000 parts of water was added thereto. After dissolution and cooling, a solid was taken out and washed with 1000 parts of water. The solid was dehydrated under a reduced pressure of 13.3 kPa at 130°C to give powdery 6-oxo-(6H)-dibenzo-(c,e)(1,2)-oxaphosphorine (DOP). DOP was also recovered from the filtrate.

For measurement of bulk density, 1g of DOP fine powder was weighed and placed in a test tube, when its volume was measured. It was in the form of a fine powder and had a bulk density of 1.8 cm³/g. The resulting DOP had a zinc metal content of 20 ppm.

The DOP was then allowed to react with itaconic acid to synthesis an organophosphorus compound (GHM) having a carboxyl group end. The GHM corresponds to Compound (s), which is represented by General Formula (3). It had a zinc metal content of 7 ppm. It was subjected to the copolymerization as described below.

### Example 1

### (Preparation of Thermoplastic Resin Composition for Masterbatches (II))

To a stainless steel autoclave equipped with a stirrer, a distillation column and a pressure regulator were added 832 parts of terephthalic acid, 1000 parts of the organophosphorus compound (GHM) produced in Reference Example 1, which was in a 50% ethylene glycol solution and for forming a polymer with a phosphorus content of 30000 ppm, and 184 parts of ethylene glycol and further 0.62 parts of antimony trioxide and 3.26 parts of triethylamine. The mixture was subjected to esterification under a gauge pressure of 2.5 kg/cm² at 245°C for two hours while water produced by the esterification was successively removed. The reaction system was subsequently heated to 275°C in one hour while the pressure of the system was gradually reduced to 0.1 mmHg. Under these conditions, condensation polymerization was performed until the melt viscosity reached 3500 poise (275°C). The melt was then discharged from a 10 mmϕ circular orifice, cooled and held in air at 25°C for 0.25 seconds, and cooled and solidified in water at 15°C. Thereafter, the solid was cut into pellets each having an elliptical section 4.0 mm in major axis, 2.5 mm in minor axis, and 4.0 mm in length. After dried, the pellets had a water content of 0.02%.

The resulting pellets (the thermoplastic resin composition for masterbatches) had a phosphorus content of 30000 ppm, a limiting viscosity of 0.68, and the color values L=29 and b=9.

### (Preparation of Thermoplastic Resin Composition for masterbatches (I))

The DOP composition obtained in Reference Example 1 was mixed with a normal polyethylene terephthalate (PET) using a vent-equipped biaxial kneader to form a thermoplastic resin composition for masterbatches that was adjusted so as to have a phosphorus content of 30000 ppm. The resulting composition had a melt viscosity of 3500 poise (275°C). Its limiting viscosity and color values are shown in Table 1.

### (Preparation of Thermoplastic Resin Composition)

The resulting thermoplastic resin composition for masterbatches (I) and (II) were each molten and mixed with each of different types of polyester resins (base resins) as shown in Table 1 by a vent-equipped biaxial kneader to form a polyester resin composition that was adjusted so as to have a phosphorus content of 6000 ppm.

### Example 2

### (Preparation of Thermoplastic resin composition for Masterbatches (II))

One hundred parts of dimethyl terephthalate and 70 parts of 1,4-butanediol were mixed with titanium tetrabutoxide (50 ppm of atomic titanium based on the amount of the acid component), and the organophosphorus compound (GHM) produced in Reference Example 1 was further added thereto such that the resulting polymer would have a phosphorus content of 30000 ppm. Stirring was started under normal pressure at 150°C, and the temperature was raised to 200°C while methanol, a by-product, was removed by distillation. After 180 minutes, the temperature was raised from 200°C to 250°C over 45 minutes while the pressure of the reaction system was gradually reduced to 13.3 Pa. The condensation polymerization reaction was further conducted under 13.3 Pa at 250°C until the melt viscosity reached 3500 poise (275°C). Thereafter, the solid was cut into pellets each having an elliptical section 4.0 mm in major axis, 2.5 mm in minor axis, and 4.0 mm in length. After dried, the pellets had a water content of 0.02%.

The resulting pellets (the thermoplastic resin composition for masterbatches) had a phosphorus content of 30000 ppm, a limiting viscosity of 0.85, and the color values L=60 and b=18.

### (Preparation of Thermoplastic Resin Composition for masterbatches (I))

The DOP composition obtained in Reference Example 1 was mixed with a normal polybutylene terephthalate (PBT) using a vent-equipped biaxial kneader to form a thermoplastic resin composition for masterbatches that was adjusted so as to have a phosphorus content of 30000 ppm. The resulting composition had a melt viscosity of 3500 poise (275°C). Its limiting viscosity and color values are shown in Table 1.

### (Preparation of Thermoplastic Resin Composition)

The resulting thermoplastic resin composition for masterbatches (I) and (II) were each molten and mixed with each of different types of polyester resins (base resins) as shown in Table 1 by a vent-equipped biaxial kneader to form a polyester resin composition that was adjusted so as to have a phosphorus content of 6000 ppm.

### Example 3

### (Preparation of Thermoplastic Resin Composition for Masterbatches (II))

Dimethyl terephthalate and 1,3-propanediol were mixed in the molar ratio of 1:2, to which a mixture (9: 1) of calcium acetate and cobalt acetate was added in an amount that corresponded to 0.1% of the theoretical polymer amount. The organophosphorus compound (GHM) obtained in Reference Example 1 was subsequently added thereto (such that the resulting polymer would have a phosphorus content of 3000 ppm). The temperature was gradually raised, and transesterification was completed at 240°C. To the resulting transesterification product, titanium tetrabutoxide was added in an amount of 0.1% of the theoretical polymer amount. The pressure was reduced to 0.1 mmHg at 270°C, and the reaction was conducted until the melt viscosity reached 3500 poise (275°C). Thereafter, the solid was cut into pellets each having an elliptical section 4.0 mm in major axis, 2.5 mm in minor axis, and 4.0 mm in length. After dried, the pellets had a water content of 0.02%.

The resulting pellets (the thermoplastic resin composition for masterbatches) had a phosphorus content of 30000 ppm, a limiting viscosity of 0.85, and the color values L=61 and b=16.

### (Preparation of Thermoplastic Resin Composition for masterbatches (I))

The DOP composition obtained in Reference Example 1 was mixed with a normal polytrimethylene terephthalate (PTT) using a vent-equipped biaxial kneader to form a thermoplastic resin composition for masterbatches that was adjusted so as to have a phosphorus content of 30000 ppm. The resulting composition had a melt viscosity of 3500 poise (275°C). Its limiting viscosity and color values are shown in Table 1.

### (Preparation of Thermoplastic Resin Composition)

The resulting thermoplastic resin composition for masterbatchess (I) and (II) were each molten and mixed with each of different types of polyester resins (base resins) as shown in Table 1 by a vent-equipped biaxial kneader to form a polyester resin composition that was adjusted so as to have a phosphorus content of 6000 ppm.

### Example 4

### (Preparation of Thermoplastic Resin Composition for Masterbatches (II))

Polymerization was performed using the process of Example 1 except that germanium dioxide (200 ppm of atomic germanium based on the amount of the acid component) was used as a catalyst in place of the antimony trioxide. Thereafter, the solid was cut into pellets each having an elliptical section 4.0 mm in major axis, 2.5 mm in minor axis, and 4.0 mm in length. After dried, the pellets had a water content of 0.02%.

The resulting pellets (the thermoplastic resin composition for masterbatches) had a phosphorus content of 30000 ppm, a limiting viscosity of 0.66, and the color values L=37 and b=16.

### (Preparation of Thermoplastic Resin Composition)

The resulting thermoplastic resin composition for masterbatches (II) were each molten and mixed with each of different types of polyester resins (base resins) as shown in Table 1 by a vent-equipped biaxial kneader to form a polyester resin composition that was adjusted so as to have a phosphorus content of 6000 ppm.

### Example 5

### (Preparation of Thermoplastic Resin Composition for Masterbatches (II))

Condensation polymerization was performed using the process of Example 1 except that the amount of GHM was changed such that the resulting polymer would have a phosphorus content of 20000 ppm. Thereafter, the solid was cut into pellets each having an elliptical section 4.0 mm in major axis, 2.5 mm in minor axis, and 4.0 mm in length. After dried, the pellets had a water content of 0.02%.

The resulting pellets (the thermoplastic resin composition for masterbatches) had a phosphorus content of 20000 ppm, a limiting viscosity of 0.64, and the color values L=43 and b=18.

### (Preparation of Thermoplastic Resin Composition)

The resulting thermoplastic resin composition for masterbatches (II) were each molten and mixed with each of different types of polyester resins (base resins) as shown in Table 1 by a vent-equipped biaxial kneader to form a polyester resin composition that was adjusted so as to have a phosphorus content of 6000 ppm.

### Example 6

### (Preparation of Thermoplastic Resin Composition for Masterbatches (II))

Condensation polymerization was performed using the process of Example 1 except that the amount of GHM was changed such that the resulting polymer would have a phosphorus content of 40000 ppm. Thereafter, the solid was cut into pellets each having an elliptical section 4.0 mm in major axis, 2.5 mm in minor axis, and 4.0 mm in length. After dried, the pellets had a water content of 0.02%.

The resulting pellets (the thermoplastic resin composition for masterbatches) had a phosphorus content of 40000 ppm, a limiting viscosity of 0.62, and the color values L=25 and b=9.

### (Preparation of Thermoplastic Resin Composition)

The resulting thermoplastic resin composition for masterbatches (II) were each molten and mixed with each of different types of polyester resins (base resins) as shown in Table 1 by a vent-equipped biaxial kneader to form a polyester resin composition that was adjusted so as to have a phosphorus content of 6000 ppm.

### Example 7

### (Preparation of Thermoplastic Resin Composition for Masterbatches (II))

The process of Example 4 was used except that a fluorescent brightening agent (Hostalux KS manufactured by Clariant, 30 ppm based on the amount of the polymer) was added to the resulting polymer after the completion of the esterification, and then condensation polymerization was performed. Thereafter, the solid was cut into pellets each having an elliptical section 4.0 mm in major axis, 2.5 mm in minor axis, and 4.0 mm in length. After dried, the pellets had a water content of 0.02%.

The resulting pellets (the thermoplastic resin composition for masterbatches) had a phosphorus content of 30000 ppm, a limiting viscosity of 0.64, and the color values L=57 and b=22.

### (Preparation of Thermoplastic Resin Composition)

The resulting thermoplastic resin composition for masterbatches (II) were each molten and mixed with each of different types of polyester resins (base resins) as shown in Table 1 by a vent-equipped biaxial kneader to form a polyester resin composition that was adjusted so as to have a phosphorus content of 6000 ppm.

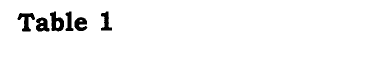

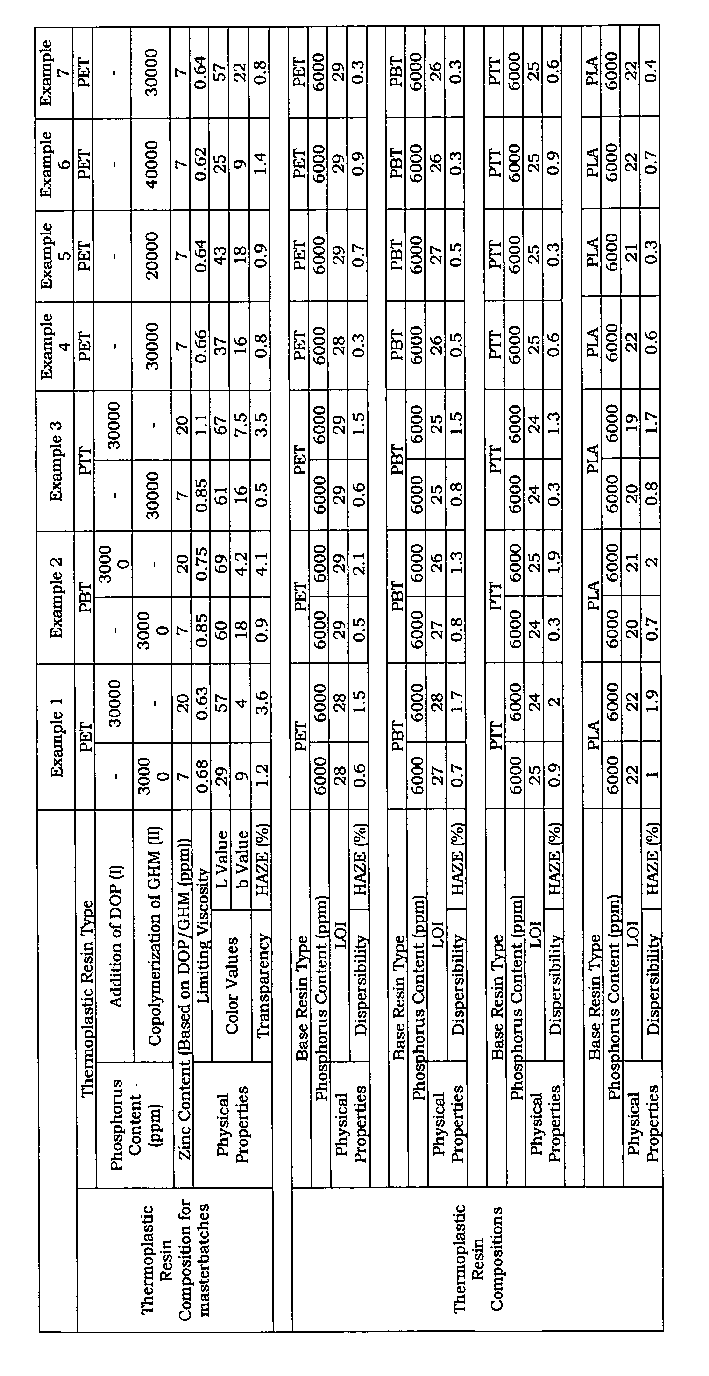

In Table 1, PET represents polyethylene terephthalate, PBT polybutylene terephthalate, PTT polytrimethylene terephthalate, and PLA polylactic acid.

### Examples 1-1 to 7-1

The effect of addition of each additive (weather-resistance-imparting agent) to each of the thermoplastic resin composition for masterbatches (I) and (II) produced in Examples 1 to 7 is shown in Table 2. In the case of the thermoplastic resin composition for masterbatches (I), the additive was added when the thermoplastic resin was mixed with the DOP composition. In the case of the thermoplastic resin composition for masterbatches (II), the additive was added when GHM was synthesized. The additive was added in an amount of 0.1% based on the amount of the masterbatch thermoplastic resin.

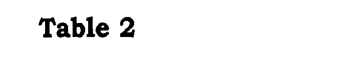

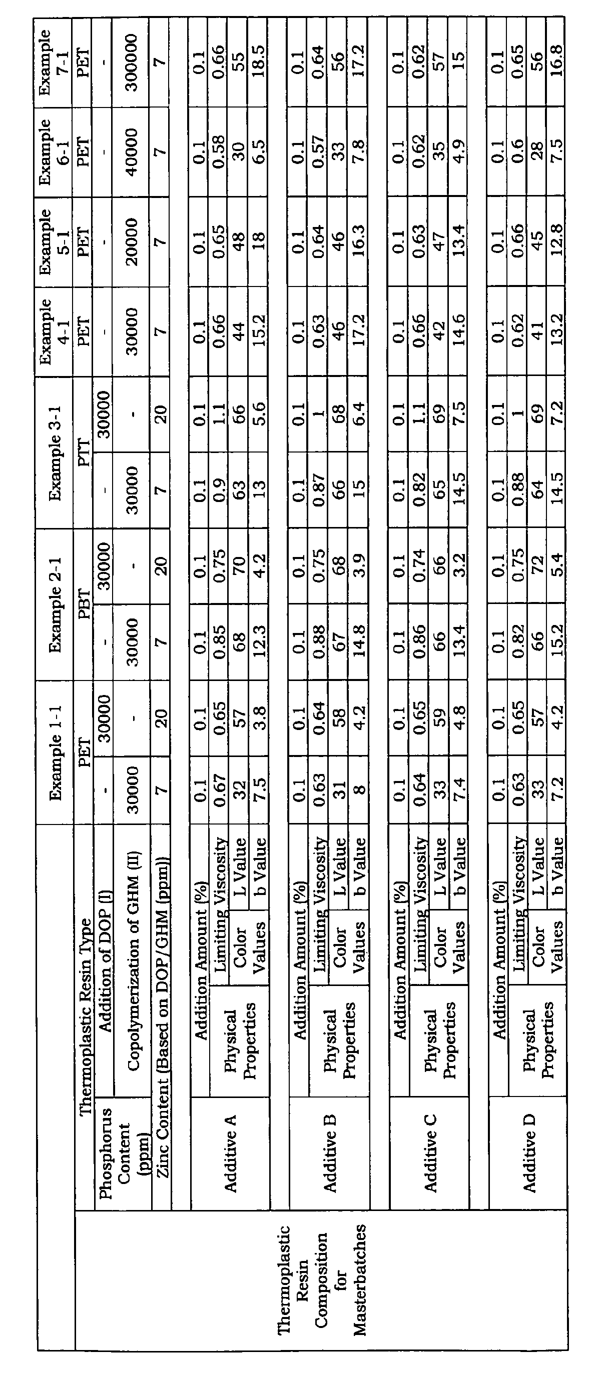

In Table 2, Additives A, B, C, and D are as follows.
A: 4-tert-butylcatechol
B: 1,3,5-tris(4-tert-butyl-3-hydroxy-2,6-dimethylbenzyl)isocyanurate (Cyanox 1790 (trade name) manufactured by Cyanamid Japan Ltd.)
C: Calcium 3,5-di-tert-butyl-4-hydroxy-benzyl-mono-ethylphosphonate (IR1425WL (trade name) manufactured by Ciba Specialty Chemicals Inc.), nickel 3,5-di-tert-butyl-4-hydroxybenzyl-mono-ethyl-phosphonate (Irgastab 2002 (trade name) manufactured by Ciba Specialty Chemicals Inc.)
D: 1,3,5-trimethyl-2,4,6-tris(3,5-di-tert-butyl-4-hydroxyl)benzene (IR1330 (trade name) manufactured by Ciba Specialty Chemicals Inc.)

### Reference Example 11

### (Synthesis of Organophosphorus Compound)

(2-carboxyethyl)phenylphosphinic acid (CPPA) was synthesized by the method disclosed in Japanese Patent Publication No. 60-21600 and then recrystallized from water. It had a melting point of 160°C. CPPA is the compound represented by General Formula (4), wherein R³ is phenyl, R⁴ is carboxyl, and A¹ is ethylene.

For measurement of bulk density, 1g of CPPA fine powder was weighed and placed in a test tube, when its volume was measured. It was in the form of a fine powder and had a bulk density of 1.8 cm³/g. The content of zinc metal in the resulting CPPA was 0 ppm.

### Example 11

### (Preparation of Thermoplastic Resin Composition for Masterbatches (II))

To a stainless steel autoclave equipped with a stirrer, a distillation column and a pressure regulator were added 1338 parts of terephthalic acid, 416 parts of CPPA produced in Reference Example 11, which was for forming a polymer with a phosphorus content of 30000 ppm, and 1000 parts of ethylene glycol and further 7.29 parts of antimony trioxide and 30.4 parts of triethylamine. The mixture was subjected to esterification under a gauge pressure of 2.5 kg/cm² at 245°C for two hours while water produced by the esterification was successively removed. The reaction system was subsequently heated to 275°C in one hour while the pressure of the system was gradually reduced to 0.1 mmHg. Under these conditions, condensation polymerization was performed until the melt viscosity reached 3500 poise (275°C). Thereafter, the solid was cut into pellets each having an elliptical section 4.0 mm in major axis, 2.5 mm in minor axis, and 4.0 mm in length. After dried, the pellets had a water content of 0.02%.

The resulting pellets (the thermoplastic resin composition for masterbatches) had a phosphorus content of 30000 ppm, a limiting viscosity of 0.65, and the color values L=41 and b=7.2.

### (Preparation of Thermoplastic Resin Composition for masterbatches (I))

The CPPA composition obtained in Reference Example 11 was mixed with a normal polyethylene terephthalate (PET) using a vent-equipped biaxial kneader to form a thermoplastic resin composition for masterbatches that was adjusted so as to have a phosphorus content of 30000 ppm. The resulting composition had a melt viscosity of 3500 poise (275°C). Its limiting viscosity and color values are shown in Table 3.

### (Preparation of Thermoplastic Resin Composition)

The resulting thermoplastic resin composition for masterbatches (I) and (II) were each molten and mixed with each of different types of polyester resins (base resins) as shown in Table 3 by a vent-equipped biaxial kneader to form a polyester resin composition that was adjusted so as to have a phosphorus content of 6000 ppm.

### Example 12

### (Preparation of Thermoplastic resin composition for Masterbatches (II))

One hundred parts of dimethyl terephthalate and 70 parts of 1,4-butanediol were mixed with titanium tetrabutoxide (50 ppm of atomic titanium based on the amount of the acid component), and 22 parts of the CPPA produced in Reference Example 11 was further added thereto. Stirring was started under normal pressure at 150°C, and the temperature was raised to 200°C while methanol, a by-product, was removed by distillation. After 180 minutes, the temperature was raised from 200°C to 250°C over 45 minutes while the pressure of the reaction system was gradually reduced to 13.3 Pa. The condensation polymerization reaction was further conducted under 13.3 Pa at 250°C until the melt viscosity reached 3500 poise (275°C). Thereafter, the solid was cut into pellets each having an elliptical section 4.0 mm in major axis, 2.5 mm in minor axis, and 4.0 mm in length. After dried, the pellets had a water content of 0.02%.

The resulting pellets (the thermoplastic resin composition for masterbatches) had a phosphorus content of 30000 ppm, a limiting viscosity of 0.75, and the color values L=60 and b=11.1.

### (Preparation of Thermoplastic Resin Composition)

The resulting thermoplastic resin composition for masterbatches (II) were each molten and mixed with each of different types of polyester resins (base resins) as shown in Table 3 by a biaxial kneader to form a polyester resin composition that was adjusted so as to have a phosphorus content of 6000 ppm.

### Example 13

### (Preparation of Thermoplastic Resin Composition for Masterbatches (II))

Dimethyl terephthalate and 1,3-propanediol were mixed in the molar ratio of 1:2, to which a mixture (9:1) of calcium acetate and cobalt acetate was added in an amount that corresponded to 0.1% of the theoretical polymer amount. The CPPA obtained in Reference Example 11 was subsequently added thereto (such that the resulting polymer would have a phosphorus content of 3000 ppm). The temperature was gradually raised, and transesterification was completed at 240°C. To the resulting transesterification product, titanium tetrabutoxide was added in an amount of 0.1% of the theoretical polymer amount. The pressure was reduced to 0.1 mmHg at 270°C, and the reaction was conducted until the melt viscosity reached 3500 poise (275°C). Thereafter, the solid was cut into pellets each having an elliptical section 4.0 mm in major axis, 2.5 mm in minor axis, and 4.0 mm in length. After dried, the pellets had a water content of 0.02%.

The resulting pellets (the thermoplastic resin composition for masterbatches) had a phosphorus content of 30000 ppm, a limiting viscosity of 1.1, and the color values L=56 and b=10.3.

### (Preparation of Thermoplastic Resin Composition)

The resulting thermoplastic resin composition for masterbatches (II) were each molten and mixed with each of different types of polyester resins (base resins) as shown in Table 3 by a vent-equipped biaxial kneader to form a polyester resin composition that was adjusted so as to have a phosphorus content of 6000 ppm.

### Example 14

### (Preparation of Thermoplastic Resin Composition for Masterbatches (II))

Polymerization was performed using the process of Example 11 except that germanium dioxide (200 ppm of atomic germanium based on the amount of the acid component) was used as a catalyst in place of the antimony trioxide. Thereafter, the solid was cut into pellets each having an elliptical section 4.0 mm in major axis, 2.5 mm in minor axis, and 4.0 mm in length. After dried, the pellets had a water content of 0.02%.

The resulting pellets (the thermoplastic resin composition for masterbatches) had a phosphorus content of 30000 ppm, a limiting viscosity of 0.66, and the color values L=51 and b=12.2.

### (Preparation of Thermoplastic Resin Composition)

The resulting thermoplastic resin composition for masterbatches (II) were each molten and mixed with each of different types of polyester resins (base resins) as shown in Table 3 by a vent-equipped biaxial kneader to form a polyester resin composition that was adjusted so as to have a phosphorus content of 6000 ppm.

### Example 15

### (Preparation of Thermoplastic Resin Composition for Masterbatches (II))

Condensation polymerization was performed using the process of Example 11 except that the amount of CPPA was changed such that the resulting polymer would have a phosphorus content of 20000 ppm. Thereafter, the solid was cut into pellets each having an elliptical section 4.0 mm in major axis, 2.5 mm in minor axis, and 4.0 mm in length. After dried, the pellets had a water content of 0.02%.

The resulting pellets (the thermoplastic resin composition for masterbatches) had a phosphorus content of 20000 ppm, a limiting viscosity of 0.66, and the color values L=49 and b=11.7.

### (Preparation of Thermoplastic Resin Composition)

The resulting thermoplastic resin composition for masterbatches (II) were each molten and mixed with each of different types of polyester resins (base resins) as shown in Table 3 by biaxial kneader to form a polyester resin composition that was adjusted so as to have a phosphorus content of 6000 ppm.

### Example 16

### (Preparation of Thermoplastic Resin Composition for Masterbatches (II))

Condensation polymerization was performed using the process of Example 11 except that the amount of CPPA was changed such that the resulting polymer would have a phosphorus content of 40000 ppm. Thereafter, the solid was cut into pellets each having an elliptical section 4.0 mm in major axis, 2.5 mm in minor axis, and 4.0 mm in length. After dried, the pellets had a water content of 0.02%.

The resulting pellets (the thermoplastic resin composition for masterbatches) had a phosphorus content of 40000 ppm, a limiting viscosity of 0.65, and the color values L=42 and b=10.7.

### (Preparation of Thermoplastic Resin Composition)

The resulting thermoplastic resin composition for masterbatches (II) were each molten and mixed with each of different types of polyester resins (base resins) as shown in Table 3 by biaxial kneader to form a polyester resin composition that was adjusted so as to have a phosphorus content of 6000 ppm.

### Example 17

### (Preparation of Thermoplastic Resin Composition for Masterbatches (II))

Condensation polymerization was performed using the process of Example 11 except that zinc acetate (20 ppm of zinc metal based on the amount of CPPA) was added when the polymer was produced. Thereafter, the solid was cut into pellets each having an elliptical section 4.0 mm in major axis, 2.5 mm in minor axis, and 4.0 mm in length. After dried, the pellets had a water content of 0.02%.

The resulting pellets (the thermoplastic resin composition for masterbatches) had a phosphorus content of 30000 ppm, a limiting viscosity of 0.66, and the color values L=48 and b=10.2.

### (Preparation of Thermoplastic Resin Composition)

The resulting thermoplastic resin composition for masterbatches (II) were each molten and mixed with each of different types of polyester resins (base resins) as shown in Table 3 by a vent-equipped biaxial kneader to form a polyester resin composition that was adjusted so as to have a phosphorus content of 6000 ppm.

### Example 18

### (Preparation of Thermoplastic Resin Composition for Masterbatches (II))

The process of Example 14 was used except that a fluorescent brightening agent (Hostalux KS manufactured by Clariant, 30 ppm based on the amount of the polymer) was added to the resulting polymer after the completion of the esterification, and then condensation polymerization was performed. Thereafter, the solid was cut into pellets each having an elliptical section 4.0 mm in major axis, 2.5 mm in minor axis, and 4.0 mm in length. After dried, the pellets had a water content of 0.02%.

The resulting pellets (the thermoplastic resin composition for masterbatches) had a phosphorus content of 30000 ppm, a limiting viscosity of 0.63, and the color values L=59 and b=8.7.

### (Preparation of Thermoplastic Resin Composition)

The resulting thermoplastic resin composition for masterbatches (II) were each molten and mixed with each of different types of polyester resins (base resins) as shown in Table 3 by a vent-equipped biaxial kneader to form a polyester resin composition that was adjusted so as to have a phosphorus content of 6000 ppm.

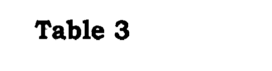

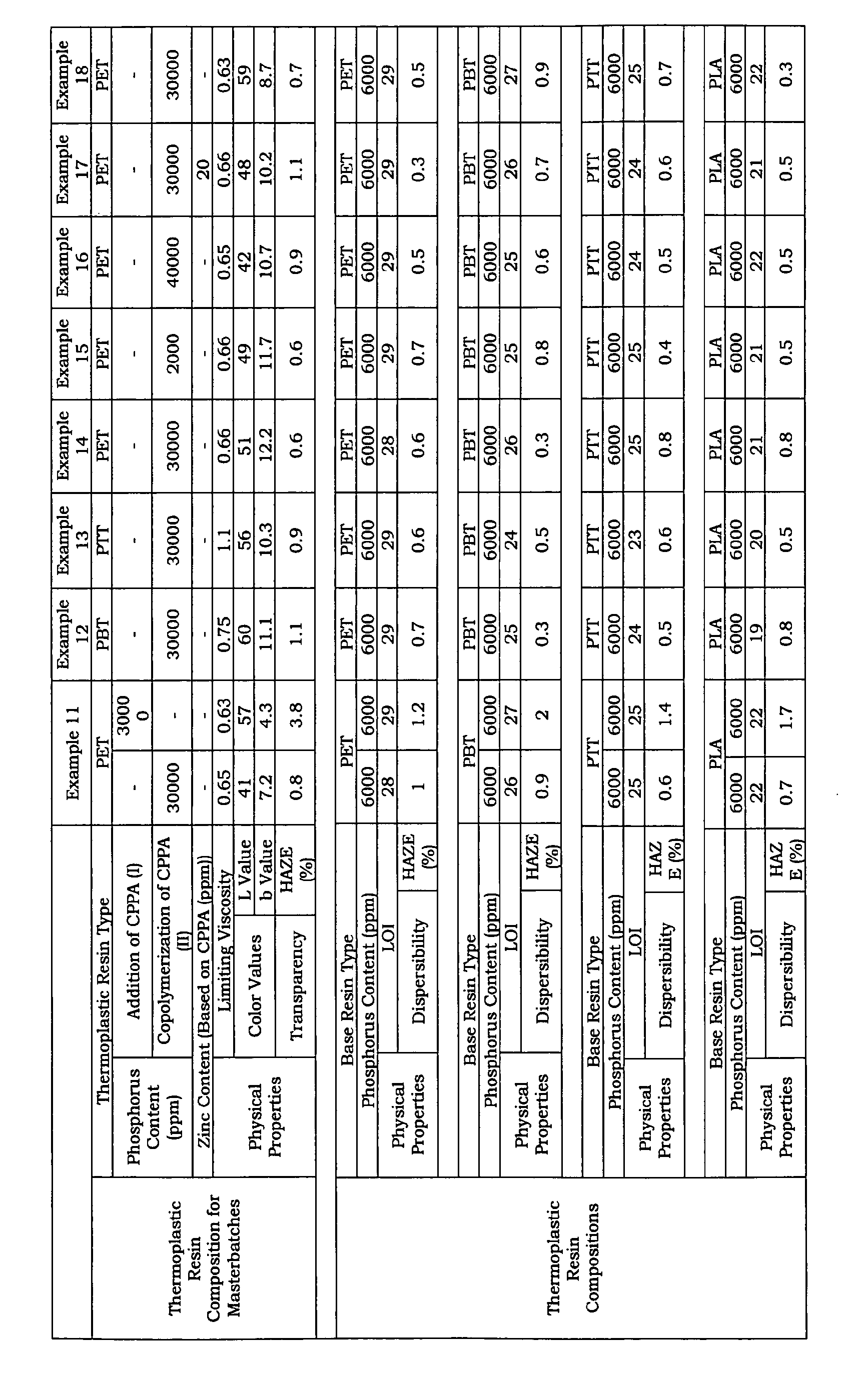

In Table 3, PET, PBT, PTT, and PLA each represent the same substance as in Table 1.

### Examples 11-1 to 18-1

The effect of addition of each additive (weather-resistance-imparting agent) to each of the thermoplastic resin composition for masterbatchess (I) and (II) produced in Examples 11 to 18 is shown in Table 4. In the case of the thermoplastic resin composition for masterbatches (I), the additive was added when the thermoplastic resin was mixed with CPPA. In the case of the thermoplastic resin composition for masterbatches (II), the additive was added when the polymer was synthesized. The additive was added in an amount of 0.1% based on the amount of the masterbatch thermoplastic resin.

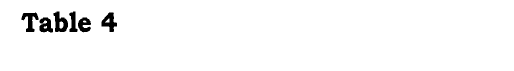

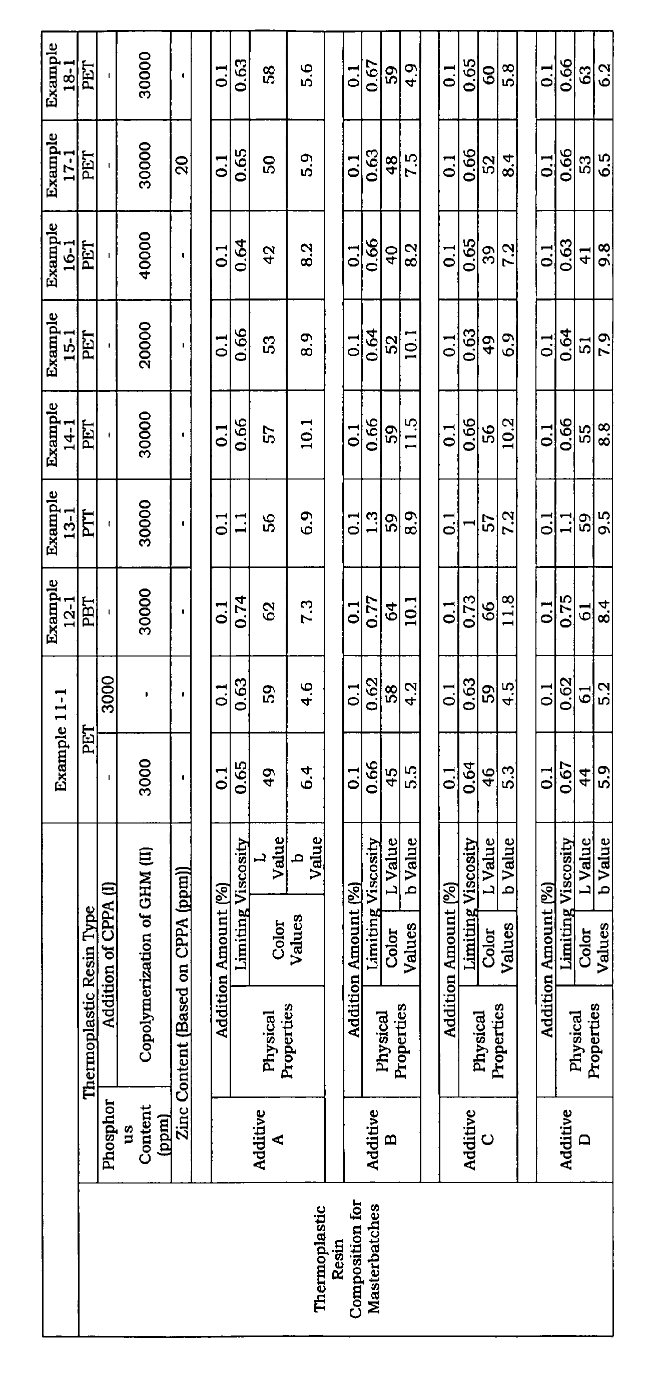

In Table 4, Additives A to D are the same as those in Table 2.

### INDUSTRIAL APPLICABILITY

The thermoplastic resin composition for masterbatches of the invention can easily be mixed as a masterbatch with the same type or a different type of thermoplastic resin (base resin) and form various types of thermoplastic resin compositions with flame retardancy. The resulting thermoplastic resin compositions can be subjected to extrusion molding, injection molding, or the like to form clothing fibers, industrial material fibers, films, engineering plastics, adhesives, or the like.

## Claims

1. A thermoplastic resin composition for masterbatches, comprising:
an organophosphorus compound represented by General Formula (1): 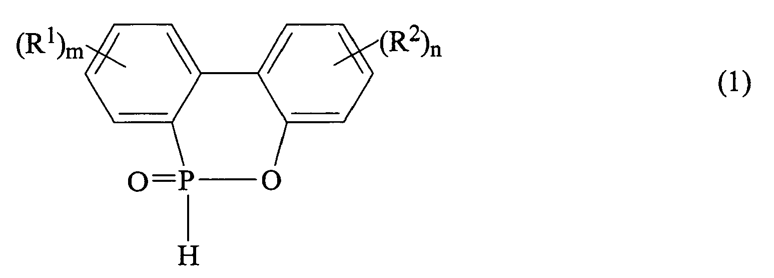 wherein R¹ and R² each represent an organic group or a halogen atom, and m and n each represent an integer of 0 to 4, and when m or n is an integer of 2 to 4, R¹ and R² may be the same or different, and/or an organophosphorus compound represented by General Formula (2): 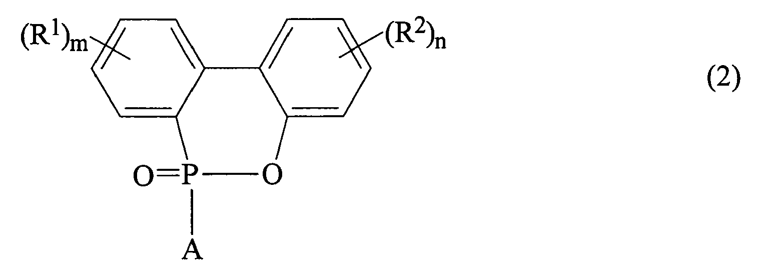 wherein R¹ and R² each represent an organic group or a halogen atom, and m and n each represent an integer of 0 to 4, and when m or n is an integer of 2 to 4, R¹ and R² may be the same or different, and A represents an organic group that is the same as or different from R¹ and R²; and
a thermoplastic resin, wherein
the thermoplastic resin composition for masterbatches contains a phosphorus content of 5000 ppm or more.

2. The thermoplastic resin composition for masterbatches according to Claim 1, wherein the thermoplastic resin composition for masterbatches contains a bivalent metal compound such that the content of the bivalent metal is from 1 ppm to 250 ppm based on the amount of the organophosphorus compound represented by General Formula (1) and/or the organophosphorus compound represented by General Formula (2).

3. A thermoplastic resin composition for masterbatches, comprising:
a thermoplastic resin in which an organophosphorus compound represented by General Formula (3): 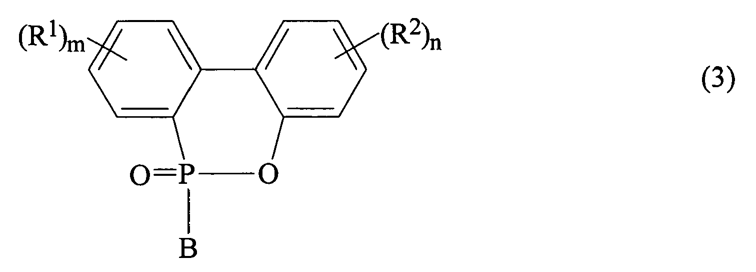 wherein R¹ and R² each represent an organic group or a halogen atom, and m and n each represent an integer of 0 to 4, and when m or n is an integer of 2 to 4, R¹ and R² may be the same or different, and B represents an organic group having a functional group, is incorporated as a constituent, wherein
the thermoplastic resin composition for masterbatches contains a phosphorus content of 5000 ppm or more.

4. The thermoplastic resin composition for masterbatches according to Claim 3, wherein the thermoplastic resin composition for masterbatches contains a bivalent metal compound such that the content of the bivalent metal is from 1 ppm to 250 ppm based on the amount of the organophosphorus compound represented by General Formula (3).

5. The thermoplastic resin composition for masterbatches according to Claim 2 or 4, wherein the bivalent metal is zinc.

6. The thermoplastic resin composition for masterbatches according to any one of Claims 1 to 5, wherein the organophosphorus compound forms a fine powder with a bulk density of 2 cm³/g or less.

7. The thermoplastic resin composition for masterbatches according to any one of Claims 1 to 6, wherein the thermoplastic resin is a polyester resin.

8. The thermoplastic resin composition for masterbatches according to Claim 7, wherein the polyester resin is at least one selected from polyethylene terephthalate, polybutylene terephthalate, polytrimethylene terephthalate, and polylactic acid.

9. The thermoplastic resin composition for masterbatches according to Claim 7 or 8, wherein a germanium compound is used as a polymerization catalyst in production of the polyester resin.

10. The thermoplastic resin composition for masterbatches according to any one of Claims 1 to 9, further comprising a weather-resistance-imparting agent.

11. The thermoplastic resin composition for masterbatches according to any one of Claims 1 to 10, wherein the weather-resistance-imparting agent is at least one compound selected from hindered amine compounds, nitrogen-containing hindered phenolic compounds, metal salt hindered phenolic compounds, phenolic compounds, hindered phenolic compounds, and sulfur compounds.

12. The thermoplastic resin composition for masterbatches according to any one of Claims 1 to 11, wherein the thermoplastic resin composition for masterbatches has an L value (whiteness) of 25 or more, where the L value is measured with a Hunter color-difference meter.

13. A thermoplastic resin composition for masterbatches, comprising:
an organophosphorus compound represented by General Formula (4): 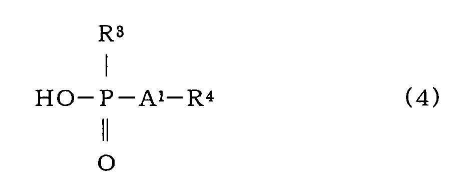 wherein R³ represents a monovalent organic group of 1 to 18 carbon atoms, R⁴ represents a monovalent functional group, and A¹ represents a bivalent organic group of 1 to 18 carbon atoms; and
a thermoplastic resin, wherein
the thermoplastic resin composition for masterbatches contains a phosphorus content of 5000 ppm or more.

14. A thermoplastic resin composition for masterbatches, comprising:
a thermoplastic resin in which an organophosphorus compound represented by General Formula (4): 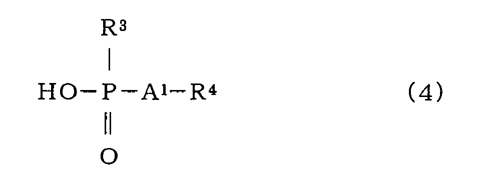 wherein R³ represents a monovalent organic group of 1 to 18 carbon atoms, R⁴ represents a monovalent functional group, and A¹ represents a bivalent organic group of 1 to 18 carbon atoms, is incorporated as a constituent, wherein
the thermoplastic resin composition for masterbatches contains a phosphorus content of 5000 ppm or more.

15. The thermoplastic resin composition for masterbatches according to Claim 13 or 14, wherein the organophosphorus compound forms a fine powder with a bulk density of at most 2 **cm**^{**3**}**/g.**

16. The thermoplastic resin composition for masterbatches according to any one of Claims 13 to 15, wherein the thermoplastic resin is a polyester resin.

17. The thermoplastic resin composition for masterbatches according to Claim 16, wherein the polyester resin is at least one selected from polyethylene terephthalate, polybutylene terephthalate, polytrimethylene terephthalate, and polylactic acid.

18. The thermoplastic resin composition for masterbatches according to Claim 16 or 17, wherein a germanium compound is used as a polymerization catalyst in production of the polyester resin.

19. The thermoplastic resin composition for masterbatches according to any one of Claims 13 to 18, further comprising a weather-resistance-imparting agent.

20. The thermoplastic resin composition for masterbatches according to any one of Claims 13 to 19, wherein the weather-resistance-imparting agent is at least one compound selected from hindered amine compounds, nitrogen-containing hindered phenolic compounds, metal salt hindered phenolic compounds, phenolic compounds, hindered phenolic compounds, and sulfur compounds.

21. The thermoplastic resin composition for masterbatches according to any one of Claims 13 to 20, wherein the thermoplastic resin composition for masterbatches has an L value (whiteness) of 40 or more, where the L value is measured with a Hunter color-difference meter.

22. The thermoplastic resin composition for masterbatches according to any one of Claims 1 to 21, wherein the thermoplastic resin composition for masterbatches has a melt viscosity of 2000 to 5000 centipoise at 275°C.

23. The thermoplastic resin composition for masterbatches according to any one of Claims 1 to 22, wherein the thermoplastic resin composition for masterbatches is in the form of chips with a height of 1 mm or more, a width of 1 mm or more and a length of 1 mm or more.

24. A method of producing a molding material in the form of chips, comprising:
discharging, from a spinneret, the thermoplastic resin composition for masterbatches according to any one of Claims 1 to 23 to form a rod-shaped molten polymer;
solidifying the rod-shaped molten polymer with cooling water; and
then cutting the solidified polymer.

25. The method according to Claim 24, further comprising cooling, with air for 0.1 to 0.6 seconds, the rod-shaped molten polymer discharged from the spinneret before solidifying it with cooling water.

26. A thermoplastic resin composition, comprising:
0.5 to 90% by weight of the thermoplastic resin composition for masterbatches according to any one of Claims 1 to 23; and
a thermoplastic resin whose type is the same as or different from the type of the thermoplastic resin used in the thermoplastic resin composition for masterbatches.

27. A method of producing a thermoplastic resin composition, comprising mixing 0.5 to 90% by weight of the thermoplastic resin composition for masterbatches according to any one of Claims 1 to 23 with a thermoplastic resin whose type is the same as or different from the type of the thermoplastic resin used in the thermoplastic resin composition for masterbatches.
